(19) Europäisches Patentamt / European Patent Office / Office européen des brevets

(11) **EP 4 651 078 A1**

(12) **EUROPEAN PATENT APPLICATION**
published in accordance with Art. 153(4) EPC

(43) Date of publication:
**19.11.2025 Bulletin 2025/47**

(21) Application number: **23916188.8**

(22) Date of filing: **11.12.2023**

(51) International Patent Classification (IPC):
**G06T 7/20** (2017.01)

(52) Cooperative Patent Classification (CPC):
**G06V 20/70; G06T 7/20; G06T 7/246; G06T 7/292; G06V 20/36; G06V 20/44; G06V 20/52; G06V 40/20;** G06T 2207/10016; G06 2207/30196; G06V 2201/07

(86) International application number:
**PCT/JP2023/044158**

(87) International publication number:
**WO 2024/150573 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2023 JP 2023001886**

(71) Applicant: **Fujitsu Limited**
**Kawasaki-shi, Kanagawa 211-8588 (JP)**

(72) Inventor: **KIKUCHI, Takashi**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **DETECTION PROGRAM, DETECTION METHOD, AND INFORMATION PROCESSING DEVICE**

(57) A detection program causes a computer to execute a process. The process includes acquiring a video in which a region of interest where an object is located is set, detecting an object that has appeared from the region by analyzing a first frame included in the acquired video, in a case where the appearance of the object is detected, determining whether or not a person who has moved the object out of a range of the region is identifiable, in a case where it is determined that the person is not identifiable, identifying a person using the object by analyzing a second frame after the first frame, and registering the identified person as the person who has moved the object out of the range of the region in a storage unit in association with the object that has appeared from the region.

FIG.2

DIAGRAM (1) ILLUSTRATING PROCESSING OF INFORMATION PROCESSING DEVICE ACCORDING TO PRESENT EMBODIMENT

## Description

Field

The present invention relates to a detection program, a detection method, and an information processing device.

Background

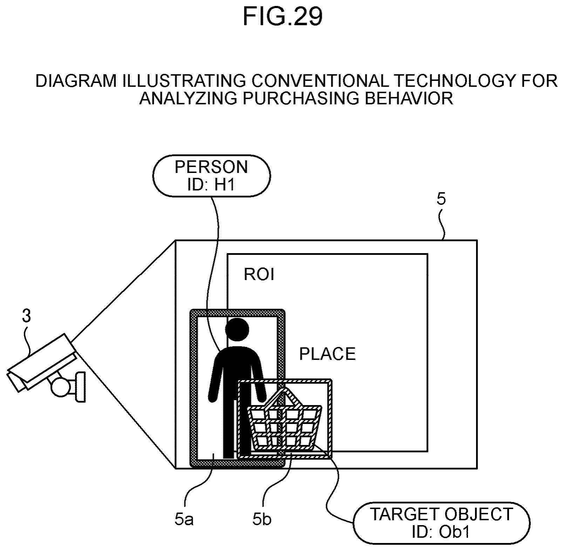

Customers' purchasing behavior is analyzed at retail sites. FIG. 29 is a diagram illustrating conventional technology for analyzing a purchasing behavior. In the following description, a device that performs processing of the conventional technology will be referred to as "conventional device" for convenience.

The conventional device detects a region 5a of a person and a region 5b of a target object by analyzing video data 5 captured by a camera 3. A person ID "H1" for identifying a person is set to the person included in the region 5a, and an object ID "Ob1" for identifying a target object is set to the target object included in the region 5b. Hereinafter, the person whose person ID is "H1" will be referred to as the person H1. The target object whose object ID is "Ob1" will be referred to as the target object Ob1. The conventional device identifies skeleton information of the person by analyzing the region 5a of the person.

The conventional device repeatedly executes the above processing on the basis of the video data 5 to estimate a positional relationship between the region 5a of the person and the region 5b of the target object and movement of the person H1 and detects an "acquisition behavior" performed by the person H1 on the target object Ob1. In a case of detecting the acquisition behavior, the conventional device sets a place region (region of interest: ROI) to limit a detection range in order to limit detection to an action near a place.

For example, the conventional device sets a rule (human behavior detection rule) for detecting the acquisition behavior in advance. For example, the human behavior detection rule includes the following conditions: con1, con2, con3, and con4. In a case where all the conditions con1 to con4 are sequentially satisfied, the conventional device determines that the person H1 has performed the acquisition behavior on the target object Ob. In a case where it is determined that the person H1 has performed the acquisition behavior on the target object Ob1, the conventional device stores the ROI, the person ID "H1", the object ID "Ob1", and the behavior "acquisition" in association with each other.

A region of a person enters the ROI. ... (Condition con1)

The person stops when acquiring a target object. ... (Condition con2)

The person reaches the ROI with his/her hand. ... (Condition con3)

A region of the hand of the person enters a region of the target object.... (Condition con4)

By using the analysis result of the conventional technology described with reference to FIG. 29, it is possible to associate a target object with a person who has acquired the target object and to detect not only that the person is holding the target object, but also where the person has acquired the target object. For example, in the example described with reference to FIG. 29, it can be detected that the person H1 has acquired the target object Ob1 in the place ROI.

Citation List

Patent Document

Patent Document 1: Japanese Laid-open Patent Publication No. 2022-36983
Patent Document 2: Japanese Laid-open Patent Publication No. 2020-173815
Patent Document 3: Japanese Laid-open Patent Publication No. 2016-201105

Summary

Technical Problem

However, in the above conventional technology, it is difficult to track a person and a target object in a case where the periphery of the ROI is congested, and thus detection omission and erroneous detection are likely to occur.

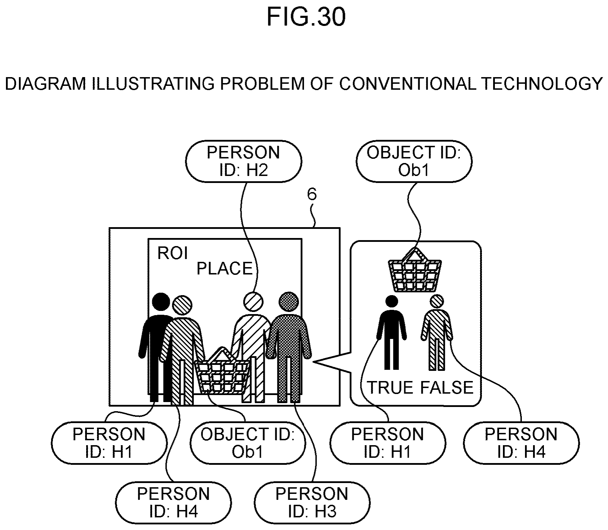

FIG. 30 is a diagram illustrating a problem of the conventional technology. For example, the conventional device detects a region of each person and a region of a target object by analyzing video data 6. The person IDs set to the respective persons are "H1", "H2", "H3", and "H4". The persons whose person IDs are "H1" to "H4" will be referred to as the persons H1 to H4, respectively. The object ID set to the target object is "Ob1". The target object whose object ID is "Ob1" will be referred to as the target object Ob1.

**EP 4 651 078 A1**

In a place (ROI), a person who has actually acquired the target object Ob1 is the person H1. However, when many persons (persons H2 to H4) are present around the person H1, the acquired target object Ob1 and the person who has performed the acquisition behavior are erroneously associated in many cases. For example, the conventional device analyzes the video data 6, and the person H4 sequentially satisfies all the conditions con1 to con4 in some cases, and thus the person ID "H4", the object ID "Ob1", and the behavior "acquisition" are erroneously associated with each other.

That is, the conventional technology has a problem that a target object that has appeared from a region of interest such as the ROI and a person who has moved the target object out of a range of the region of interest are erroneously associated.

In one aspect, an object of the present invention is to provide a detection program, a detection method, and an information processing device capable of appropriately associating a target object that has appeared from a region of interest with a person who has moved the target object out of a range of the region of interest.

SUMMARY

According to an aspect, a detection program causes a computer to execute a process. The process includes acquiring a video in which a region of interest where an object is located is set. The process includes detecting an object that has appeared from the region of interest by analyzing a first frame among a plurality of frames included in the acquired video. The process includes, in a case where the appearance of the object from the region of interest is detected, determining whether or not a person who has moved the object out of a range of the region of interest is identifiable. The process includes, in a case where it is determined that the person who has moved the object is not identifiable, identifying a person using the object by analyzing a second frame after the first frame. The process includes registering the identified person using the object as the person who has moved the object out of the range of the region of interest in a storage unit in association with the object that has appeared from the region of interest.

Advantageous Effects of Invention

It is possible to appropriately associate a target object that has appeared from a region of interest with a person who has moved the target object out of a range of the region of interest.

Brief Description of Drawings

FIG. 1 is a diagram illustrating an example of a detection system according to the present embodiment.
FIG. 2 is a diagram (1) illustrating processing of an information processing device according to the present embodiment.
FIG. 3 is a diagram (2) illustrating processing of the information processing device according to the present embodiment.
FIG. 4 is a diagram illustrating an effect of the information processing device according to the present embodiment.
FIG. 5 is a functional block diagram illustrating a configuration of the information processing device according to the present embodiment.
FIG. 6 is a diagram illustrating an example of a data structure of a person detection result table.
FIG. 7 is a diagram illustrating an example of a human body model.
FIG. 8 is a diagram illustrating an example of joint names.
FIG. 9 is a diagram illustrating an example of a data structure of an object detection result table.
FIG. 10 is a diagram illustrating an example of a data structure of an object acquisition detection result table.
FIG. 11 is a flowchart illustrating a processing procedure of object acquisition detection processing.
FIG. 12 is a diagram illustrating an example of object appearance detection processing.
FIG. 13 is a flowchart illustrating a processing procedure of the object appearance detection processing.
FIG. 14 is a diagram illustrating processing of calculating a distance between a target object and an ROI.
FIG. 15 is a diagram illustrating processing of excluding an unacquired target object in an ROI.
FIG. 16 is a diagram illustrating processing of removing the same target object.
FIG. 17 is a diagram (1) illustrating processing related to handling of instantaneous erroneous detection.
FIG. 18 is a diagram (2) illustrating processing related to handling of instantaneous erroneous detection.
FIG. 19 is a diagram (3) illustrating processing related to handling of instantaneous erroneous detection.
FIG. 20 is a flowchart illustrating a processing procedure of acquisition detection processing.
FIG. 21 is a diagram (1) illustrating an example of acquisition detection processing at the time of congestion.
FIG. 22 is a diagram (2) illustrating an example of acquisition detection processing at the time of congestion.

FIG. 23 is a flowchart illustrating a processing procedure of the information processing device according to the present embodiment.

FIG. 24 is a diagram illustrating a typical pattern (1) of erroneous detection occurring at the time of congestion according to the conventional technology.

FIG. 25 is a diagram (1) illustrating an effect of the information processing device according to the present embodiment.

FIG. 26 is a diagram illustrating a typical pattern (2) of erroneous detection occurring at the time of congestion according to the conventional technology.

FIG. 27 is a diagram (2) illustrating an effect of the information processing device according to the present embodiment.

FIG. 28 is a diagram illustrating an example of a hardware configuration of a computer that implements functions similar to those of an information processing device according to an embodiment.

FIG. 29 is a diagram illustrating conventional technology for analyzing a purchasing behavior.

FIG. 30 is a diagram illustrating a problem of the conventional technology.

Embodiments for Carrying Out the Invention

Hereinafter, embodiments of a detection program, a detection method, and an information processing device disclosed in the present application will be described in detail with reference to the drawings. Note that the present invention is not limited by the embodiments. Embodiments

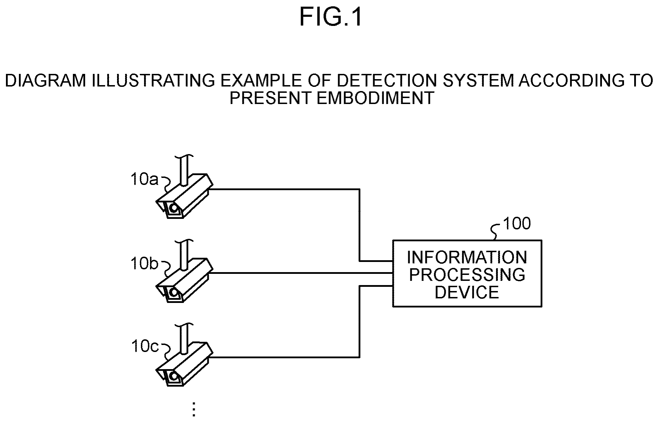

FIG. 1 is a diagram illustrating an example of a detection system according to the present embodiment. As illustrated in FIG. 1, the detection system includes cameras 10a, 10b, and 10c and an information processing device 100. The cameras 10a to 10c and the information processing device 100 are connected to each other via a network. Although only the cameras 10a to 10c are illustrated in FIG. 1 for convenience of description, the system according to the present embodiment may include other cameras.

The cameras 10a to 10c are installed at predetermined positions in a store. A plurality of places is set in the store, and a plurality of target objects is arranged in each place. In the present embodiment, description will be made by defining the target object as a "basket", but the target object may be another object such as a cart. Positions (coordinates) at which the cameras 10a to 10c are installed are different from each other. In the following description, the cameras 10a to 10c will be referred to as "cameras 10" unless otherwise distinguished.

The camera 10 captures a video of the inside of the store and transmits data of the captured video to the information processing device 100. In the present embodiment, as an example, a capturing range of the camera 10 includes a place for baskets. In the following description, the data of the video transmitted from the camera 10 to the information processing device 100 will be referred to as "video data". A region of the place for baskets on the video data is set as an ROI in advance. In the following description, the place for baskets will be referred to as the "ROI".

The video data includes a plurality of chronological image frames. Frame numbers are assigned to the respective image frames in chronological ascending order. One image frame is a still image captured by the camera 10 at a certain timing. Time data may be assigned to each image frame. Camera identification information for identifying the camera 10 that has captured the video data is set to the video data.

The information processing device 100 acquires the video data from the camera 10 and detects a basket that has appeared from the ROI by analyzing a first frame among the plurality of image frames included in the video data. When detecting a basket from the ROI, the information processing device 100 determines whether or not a person who has moved the basket out of a range of the ROI is identifiable on the basis of a congestion situation of the ROI.

When determining that the person who has moved the basket out of the range of the ROI is not identifiable, the information processing device 100 identifies a person who has acquired the basket by analyzing a second frame after the first frame. The information processing device 100 registers the identified person as the person who has moved the basket out of the range of the ROI in a storage unit in association with the object that has appeared from the ROI.

By executing the above processing, the information processing device 100 can appropriately associate the basket that has appeared from the ROI with the person who has moved the basket out of the range of the ROI.

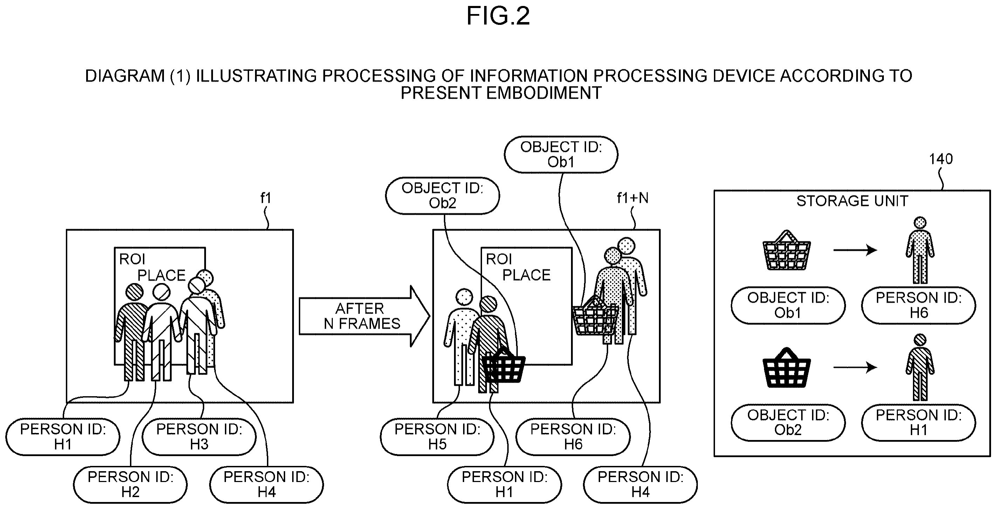

An example of processing of the information processing device 100 will be described with reference to FIG. 2. FIG. 2 is a diagram (1) illustrating the processing of the information processing device according to the present embodiment. The information processing device 100 determines whether or not the periphery of the ROI is congested on the basis of an image frame f1. For example, in a case where a ratio of a region of each person to a region of the ROI is equal to or more than a predetermined ratio, the information processing device 100 determines that the periphery of the ROI is congested. Note that, in a case where a predetermined number or more of persons or baskets are present in the region of the ROI for a certain time or more, the information processing device 100 determines that the periphery of the ROI is congested. For example, the wording "the periphery of the ROI is congested" corresponds to "the person who moved the basket out of the range of the ROI is not identifiable".

For example, the information processing device 100 detects regions of the persons whose person IDs are "H1", "H2", "H3", and "H4" in the image frame f1 of FIG. 2. The persons whose person IDs are "H1" to "H4" will be referred to as the persons H1 to H4, respectively. The information processing device 100 determines that the periphery of the ROI is congested because, in the image frame f1, the regions of the persons H1 to H4 with respect to the region of the ROI are equal to or more than the predetermined ratio.

The information processing device 100 detects regions of baskets whose object IDs are "Ob1" and "Ob2" in an image frame f1+N after N frames from the image frame f1. The baskets whose object IDs are "Ob1" and "Ob2" will be referred to as the basket Ob1 and the basket Ob2, respectively. The information processing device 100 releases tracking of the persons H2 and H3 in the image frames f1 to f1+N and newly detects regions of persons whose person IDs are "H5" and "H6" in the image frame f1+N. The persons whose person IDs are "H5" and "H6" will be referred to as the person H5 and the person H6, respectively.

The information processing device 100 compares the region of the basket Ob1 with the regions of the persons H1, H4, H5, and H6 and identifies the person H6 as an owner of the basket Ob1. The information processing device 100 compares the region of the basket Ob2 with the regions of the persons H1, H4, H5, and H6 and identifies the person H1 as an owner of the basket Ob2. The information processing device 100 repeatedly executes the processing of identifying a person who is the owner of the basket while tracking the regions of the baskets Ob1 and Ob2 in the image frame f1+N and subsequent image frames.

The information processing device 100 identifies a person who is the owner of the basket Ob1 in an image frame immediately before an image frame in which the region of the basket Ob1 is not detectable and registers the person in the storage unit in association with the basket Ob1. For example, in the image frame immediately before the image frame in which the region of the basket Ob1 is not detectable, the owner of the basket Ob1 is the person H6. In this case, the information processing device 100 registers the object ID "Ob1" and the person ID "H6" in a storage unit 140 in association with each other.

The information processing device 100 identifies a person who is the owner of the basket Ob2 in an image frame immediately before an image frame in which the region of the basket Ob2 is not detectable and registers the person in the storage unit 140 in association with the basket Ob2. For example, in the image frame immediately before the image frame in which the region of the basket Ob2 is not detectable, the owner of the basket Ob2 is the person H1. In this case, the information processing device 100 registers the object ID "Ob2" and the person ID "H1" in the storage unit 140 in association with each other.

As described with reference to FIG. 2, in a case where the periphery of the ROI is congested, the information processing device 100 detects a new basket from the ROI. The information processing device 100 tracks the detected basket, detects a final owner of the basket, and detects an acquirer of the basket.

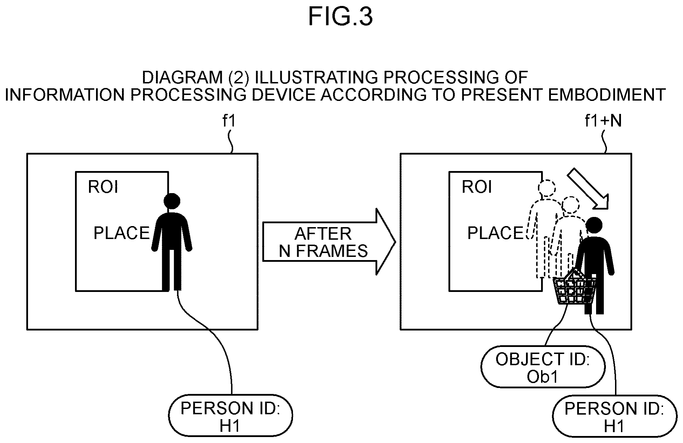

Meanwhile, when determining that the periphery of the ROI is not congested on the basis of the image frame f1, the information processing device 100 executes processing of FIG. 3. FIG. 3 is a diagram (2) illustrating the processing of the information processing device according to the present embodiment.

The information processing device 100 determines whether or not the periphery of the ROI is congested on the basis of the image frame f1. For example, in a case where the ratio of the region of each person to the region of the ROI is less than the predetermined ratio, the information processing device 100 determines that the periphery of the ROI is not congested.

In the image frame f1 of FIG. 3, the information processing device 100 detects the region of the person whose person ID is "H1". The person whose person ID is "H1" will be referred to as the person H1. The information processing device 100 tracks the person H1 in image frames after the image frame f1 and detects an "acquisition behavior" of the person H1 with respect to the basket Ob1 (the basket whose object ID is "Ob1"). For example, in a case where the person H1 performs the acquisition behavior on the basket Ob1 in the image frame f1+N after N frames from the image frame f1, the information processing device 100 defines the person H1 as an acquirer of the basket Ob1 and registers the object ID "Ob1" and the person ID "H1" in the storage unit 140 in association with each other.

As described with reference to FIG. 3, in a case where the periphery of the ROI is not congested, the information processing device 100 detects a person and tracks the person. When detecting an acquisition behavior of the person, the information processing device 100 detects the person who has performed the acquisition behavior on the basket as the acquirer of the basket.

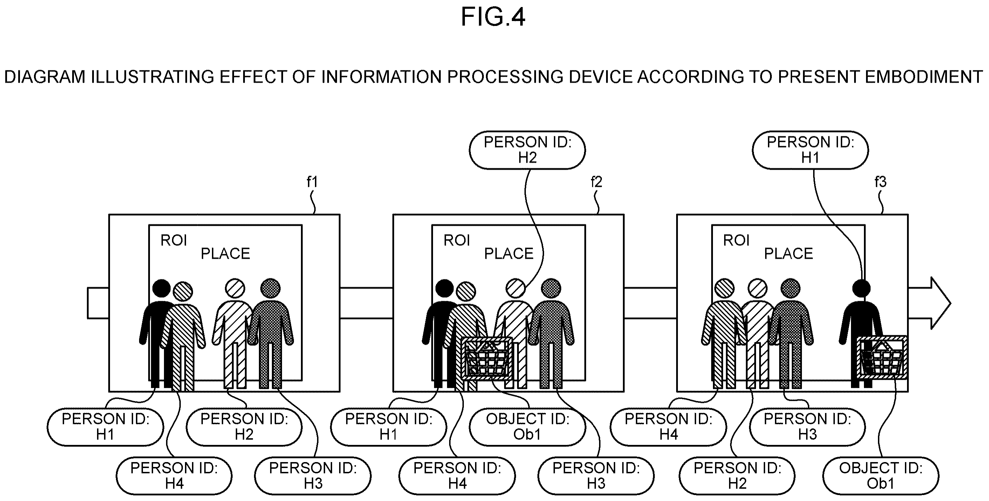

FIG. 4 is a diagram illustrating an effect of the information processing device according to the present embodiment. Here, an effect in a case where the periphery of the ROI is congested will be described. The information processing device 100 detects the regions of the persons whose person IDs are "H1", "H2", "H3", and "H4" in the image frame f1. The persons whose person IDs are "H1" to "H4" will be referred to as the persons H1 to H4, respectively. The information processing device 100 determines that the periphery of the ROI is congested because, in the image frame f1, the regions of the persons H1 to H4 with respect to the region of the ROI are equal to or more than the predetermined ratio.

The information processing device 100 detects the region of the basket whose object ID is "Ob1" in an image frame f2. The basket whose object ID is "Ob1" will be referred to as the basket Ob1. The information processing device 100 tracks the basket Ob1. The information processing device repeatedly executes the processing of identifying a person who is the owner of the basket while tracking the region of the basket Ob1 in the image frame f2 and subsequent image frames. For example, the owner of the basket Ob1 is the person H4 in the image frame f2, but at this point, the information processing device 100 does not detect the person H4 as the acquirer of the basket Ob1.

Description will be made by defining an image frame immediately before an image frame in which the region of the basket Ob1 is not detectable as an image frame f3. The owner of the basket Ob1 is the person H1 in the image frame f3, and the information processing device 100 detects the person H1 as the acquirer of the basket Ob1. By executing the above processing, the information processing device 100 can appropriately associate the target object that has appeared from the region of interest with the person who has moved the target object out of the range of the region of interest.

Meanwhile, in the conventional technology, the person ID "H4", the object ID "Ob1", and the behavior "acquisition" are erroneously associated with each other as described with reference to FIG. 30.

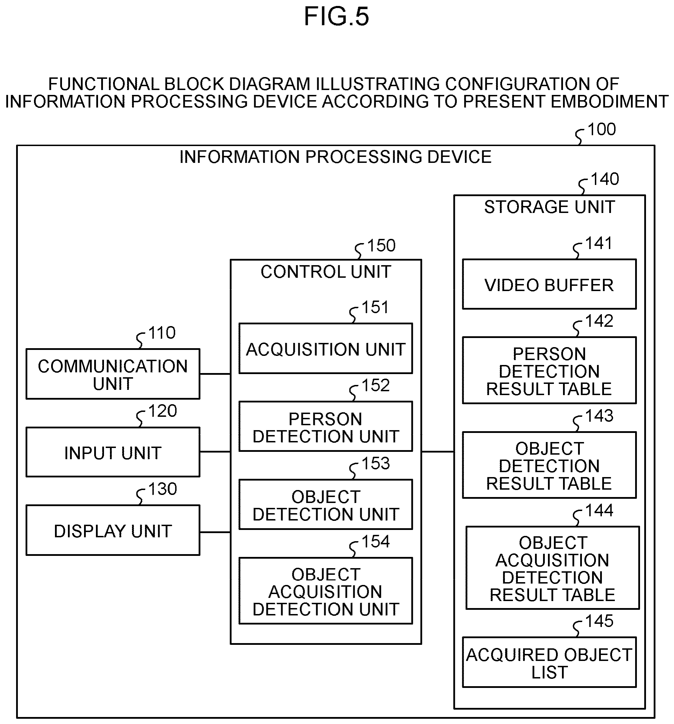

Next, a configuration example of the information processing device according to the present embodiment will be described. FIG. 5 is a functional block diagram illustrating a configuration of the information processing device according to the present embodiment. As illustrated in FIG. 5, the information processing device 100 includes a communication unit 110, an input unit 120, a display unit 130, a storage unit 140, and a control unit 150.

The communication unit 110 executes data communication with the camera 10, an external device, and the like via a network. The communication unit 110 is a network interface card (NIC) or the like. For example, the communication unit 110 receives video data from the camera 10.

The input unit 120 is an input device that inputs various types of information to the control unit 150 of the information processing device 100. The input unit 120 corresponds to, for example, a keyboard, a mouse, or a touchscreen.

The display unit 130 is a display device that displays information output from the control unit 150.

The storage unit 140 includes a video buffer 141, a person detection result table 142, an object detection result table 143, an object acquisition detection result table 144, and an acquired object list 145. The storage unit 140 is a storage device such as a memory.

The video buffer 141 holds video data captured by the camera 10. For example, the video buffer 141 holds the video data in association with the camera identification information.

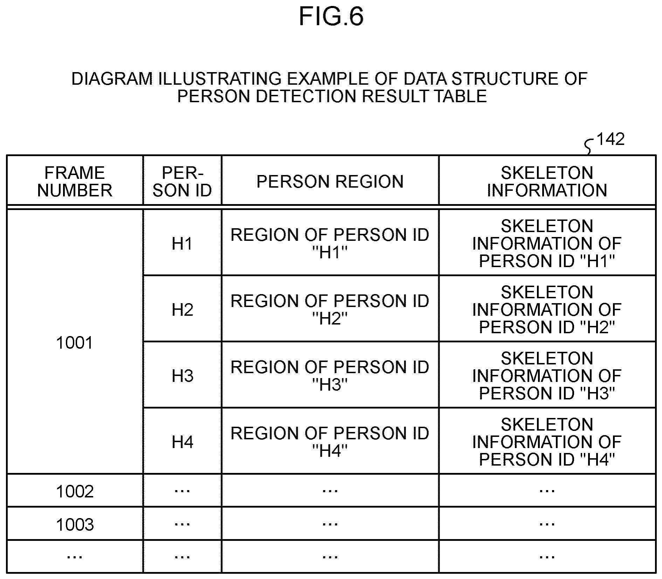

The person detection result table 142 is a table holding various types of information related to a person detected from the video data. FIG. 6 is a diagram illustrating an example of a data structure of the person detection result table. As illustrated in FIG. 6, the person detection result table 142 associates the frame number, the person ID, a person region, and skeleton information. Although not illustrated, the camera identification information for identifying the camera 10 that has captured an image frame (video data) may be further associated with the frame number.

The frame number is a frame number assigned to an image frame. The person ID is information for identifying a person. The person region indicates a region of a person in the image frame. For example, coordinates of an upper left corner and a lower right corner of the region of the person are set as the person region. The skeleton information is information in which two-dimensional or three-dimensional coordinates are set for a plurality of joints defined in a human body model.

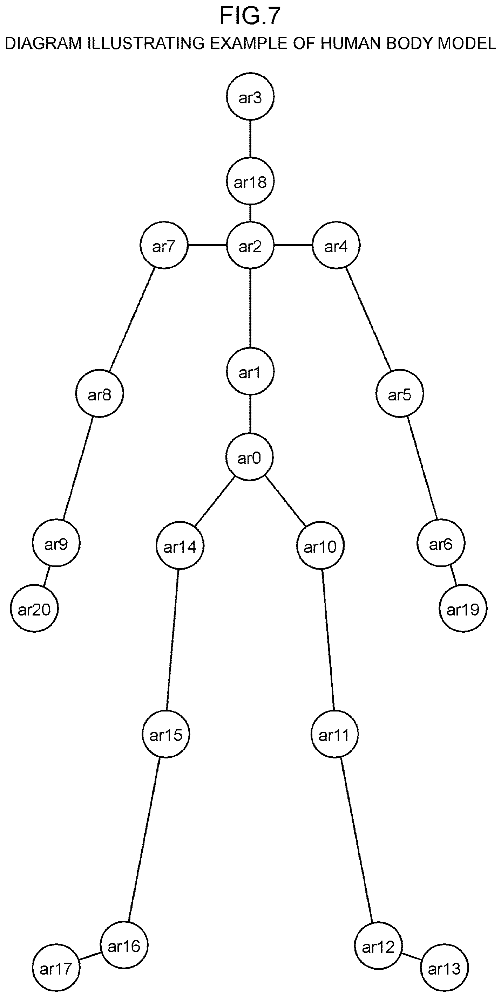

FIG. 7 is a diagram illustrating an example of the human body model. As illustrated in FIG. 7, the human body model is defined by 21 joints ar0 to ar20.

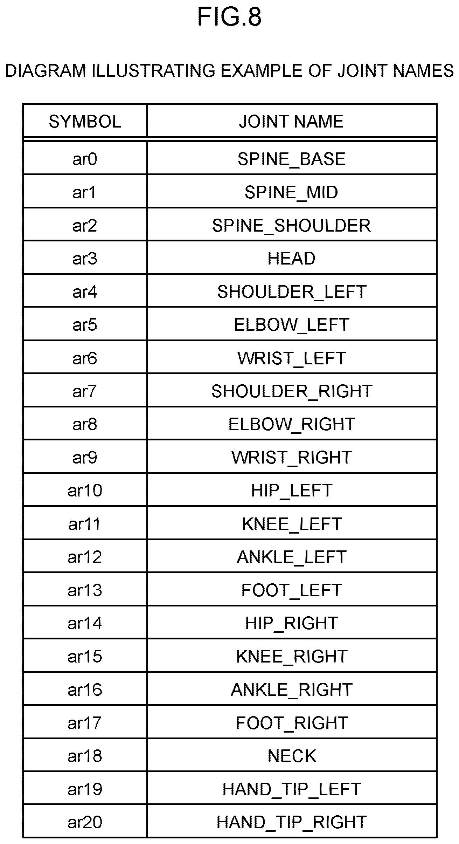

A relationship between the joints ar0 to ar20 in FIG. 7 and joint names is as illustrated in FIG. 8. FIG. 8 is a diagram illustrating an example of the joint names. For example, the joint name of the joint ar0 is "SPINE_BASE". The joint names of the joints ar1 to a20 are as illustrated in FIG. 8, and description thereof will be omitted.

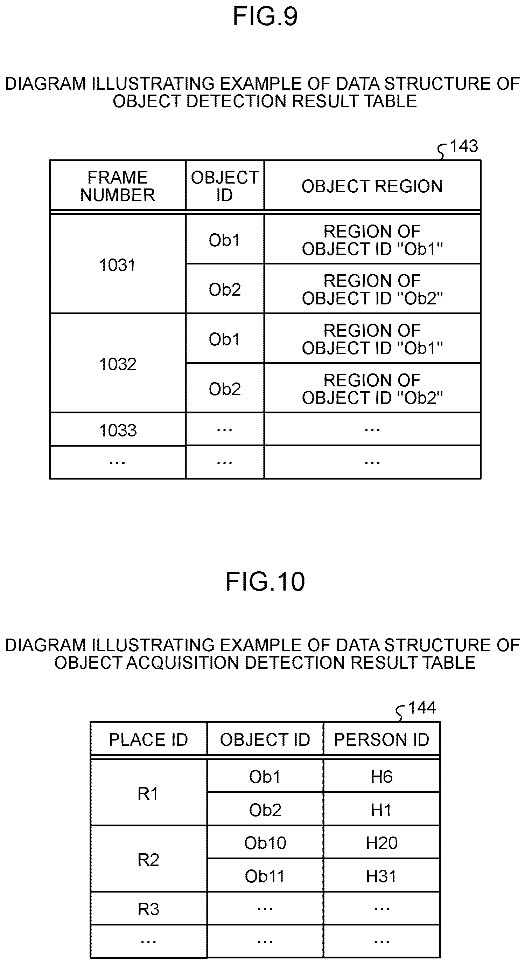

The object detection result table 143 is a table holding various types of information related to a basket detected from the video data. FIG. 9 is a diagram illustrating an example of a data structure of the object detection result table. As illustrated in FIG. 9, the object detection result table 143 associates the frame number, the object ID, and an object region.

The frame number is a frame number assigned to an image frame. The object ID is information for identifying a target object (basket). The object region indicates a region of the target object on the image frame. For example, coordinates of an upper left corner and a lower right corner of the region of the object are set as the object region.

The object acquisition detection result table 144 is a table holding information related to a detection result of a person who has acquired the basket from the ROI. FIG. 10 is a diagram illustrating an example of a data structure of the object acquisition detection result table. As illustrated in FIG. 10, the object acquisition detection result table 144 associates a place ID, the object ID, and the person ID. The place ID is information for identifying an ROI. The object ID is information for identifying an object. The person ID is information for identifying a person.

For example, in a record in the first row of FIG. 10, it is registered that the basket whose object ID is "Ob1" has been acquired from an ROI corresponding to a place ID "R1", and the person ID of the person who has acquired the basket is "H6".

The acquired object list 145 holds information of the basket acquired from the ROI among baskets detected from the video data. The information of the basket detected in a certain image frame is tracked in subsequent image frames. The acquired object list 145 associates the frame number with the object ID.

The description returns to FIG. 5. The control unit 150 includes an acquisition unit 151, a person detection unit 152, an object detection unit 153, and an object acquisition detection unit 154. The control unit 150 is a central processing unit (CPU), a graphics processing unit (GPU), or the like.

The acquisition unit 151 acquires video data from the camera 10. As described above, the camera identification information of the camera 10 that has captured the video data is set to the video data. The acquisition unit 151 stores the video data in the video buffer 141 in association with the camera identification information.

The person detection unit 152 acquires the video data from the video buffer 141 and detects a region of a person from chronological image frames of the video data. The person detection unit 152 tracks the region of the person and assigns the same person ID to the region of the same person. When detecting a region of a new person from the image frame, the person detection unit 152 assigns a new person ID. Further, the person detection unit 152 estimates skeleton information of the person on the basis of image data of the region of the person. The person detection unit 152 registers the frame number, the person ID, the person region, and the skeleton information in the person detection result table 142 in association with each other.

For example, the person detection unit 152 detects the region of the person on the basis of a first machine training model. The first machine training model is a machine training model that receives an "image frame" as an input and outputs a "region of a person" and is a trained machine training model. The first machine training model is a neural network (NN) or the like.

The person detection unit 152 estimates the skeleton information of the person by using a second machine training model. The second machine training model is a machine training model that receives "image data of a region of a person" as an input and outputs "skeleton information" and is a trained machine training model. The second machine training model is an NN or the like.

The object detection unit 153 acquires video data from the video buffer 141. The video data acquired by the object detection unit 153 is the same as the video data acquired by the person detection unit 152.

The object detection unit 153 detects a region of a basket from chronological image frames of the acquired video data. The object detection unit 153 tracks the region of the basket and assigns the same object ID to the region of the same basket. When detecting a region of a new object from the image frame, the object detection unit 153 assigns a new object ID. The object detection unit 153 registers the frame number, the object ID, and the object region in the object detection result table 143 in association with each other.

For example, the object detection unit 153 detects the region of the object on the basis of a third machine training model. The third machine training model is a machine training model that receives an "image frame" as an input and outputs a "region of an object" and is a trained machine training model. The third machine training model is an NN or the like.

The object acquisition detection unit 154 acquires a basket arranged in the ROI on the basis of the person detection result table 142 and the object detection result table 143 and detects a person who has moved the basket out of the range of the ROI. The object acquisition detection unit 154 registers the place ID, the object ID of the acquired basket, and the person ID of the person who has moved the basket in the object acquisition detection result table 144 in association with each other. The object acquisition detection unit 154 identifies the place ID on the basis of the camera identification information of the camera 10 that has captured the video data.

In a case where the periphery of the ROI is congested, the object acquisition detection unit 154 executes the processing described with reference to FIG. 2 to associate the object ID of the object extracted from the ROI with the person ID of the person who has moved the object. Meanwhile, in a case where the periphery of the ROI is not congested, the object acquisition detection unit 154 executes the processing described with reference to FIG. 3 to associate the object ID of the object extracted from the ROI with the person ID of the person who has moved the object.

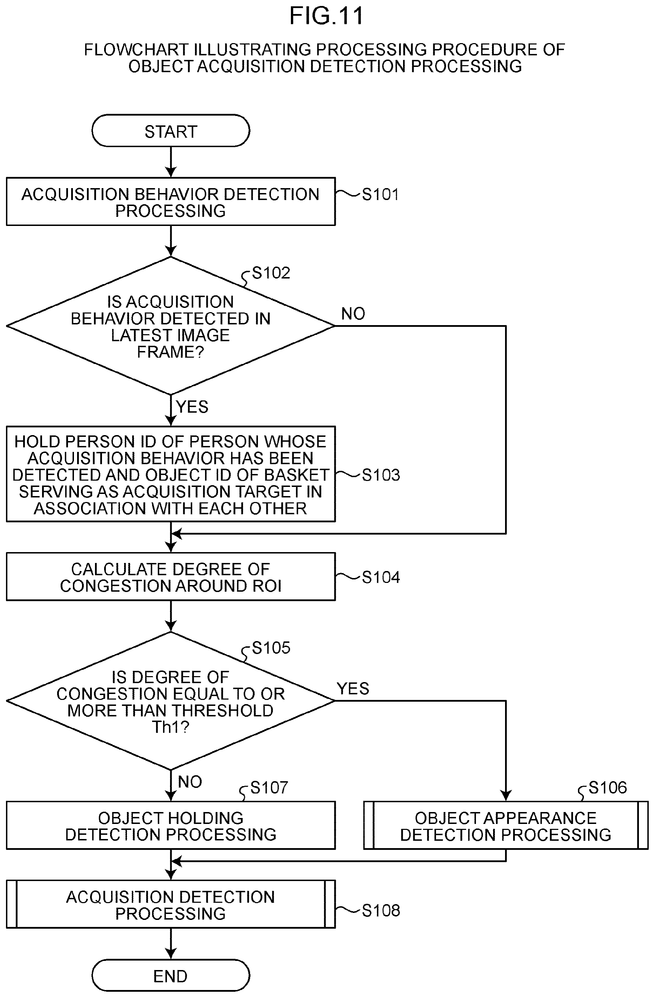

Next, processing of the object acquisition detection unit 154 will be described more specifically. For example, the object acquisition detection unit 154 executes object acquisition detection processing of FIG. 11. FIG. 11 is a flowchart illustrating a processing procedure of the object acquisition detection processing. As illustrated in FIG. 11, the object acquisition detection unit 154 executes acquisition behavior detection processing (Step S101).

The object acquisition detection unit 154 determines whether or not an acquisition behavior has been detected in the latest image frame (Step S102). When the object acquisition detection unit 154 has not detected an acquisition behavior in the latest image frame (Step S102, No), the processing proceeds to Step S104.

Meanwhile, when the object acquisition detection unit 154 has detected an acquisition behavior in the latest image frame (Step S102, Yes), the processing proceeds to Step S103. The object acquisition detection unit 154 holds a person ID of a person whose acquisition behavior has been detected and an object ID of a basket serving as an acquisition target in association with each other (Step S103).

The object acquisition detection unit 154 calculates a degree of congestion around the ROI (Step S104). When the degree of congestion is equal to or more than a threshold Th1 (Step S105, Yes), the object acquisition detection unit 154 executes object appearance detection processing (Step S106), and the processing proceeds to Step S108.

Meanwhile, when the degree of congestion is not equal to or more than the threshold Th1 (Step S105, No), the object acquisition detection unit 154 executes object holding detection processing (Step S107), and the processing proceeds to Step S108.

The object acquisition detection unit 154 executes acquisition detection processing (Step S108) and ends the processing.

Next, an example of the acquisition behavior detection processing described in Step S101 of FIG. 11 will be described. The object acquisition detection unit 154 detects an "acquisition behavior" on the basis of the human behavior detection rule. The human behavior detection rule is similar to the above conditions con1 to con4.

The object acquisition detection unit 154 determines whether or not the condition con1 is satisfied on the basis of the region of the ROI on the video data set in advance and the person region of the person detection result table 142. The object acquisition detection unit 154 determines whether or not the condition con2 is satisfied on the basis of the person region in each image frame of the person detection result table 142.

In a case where a predetermined joint of the skeleton information of the person in each image frame of the person detection result table 142 moves from the outside of the region of the ROI into the region of the ROI, the object acquisition detection unit 154 determines that the condition con3 is satisfied. For example, the predetermined joint is the joint ar20, ar19, or the like.

In a case where the predetermined joint of the skeleton information of the person in the image frame of the person detection result table 142 is included in the object region of the basket, the object acquisition detection unit 154 determines that the condition con4 is satisfied. For example, the predetermined joint is the joint ar20, ar19, or the like.

In a case where a person of a certain person ID sequentially satisfies all the conditions con1 to con4, the object acquisition detection unit 154 determines that the person of the certain person ID has performed the "acquisition behavior".

Next, an example of the processing of calculating the degree of congestion around the ROI described in Step S104 of FIG. 11 will be described. The object acquisition detection unit 154 identifies a region of a person detected from a certain image frame on the basis of the person detection result table 142. The object acquisition detection unit 154 identifies an overlapping region between the identified region of the person and the region of the ROI set in advance. The object acquisition detection unit 154 calculates a ratio of the overlapping region to the region of the ROI as the degree of congestion.

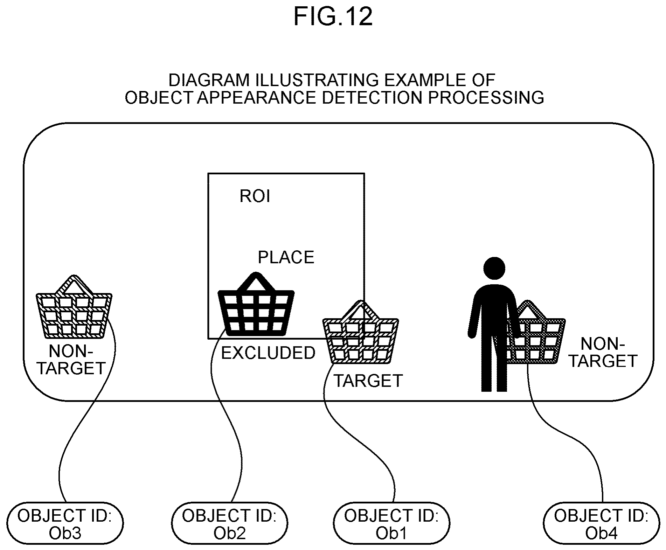

Next, an example of the object appearance detection processing described in Step S106 of FIG. 11 will be described. FIG. 12 is a diagram illustrating an example of the object appearance detection processing. The object appearance detection is to detect that a first detection place of the object is around the ROI.

In FIG. 12, baskets whose object IDs are "Ob1", "Ob2", "Ob3", and "Ob4" are detected in a certain image frame. The baskets whose object IDs are "Ob1" to "Ob4" will be referred to as the baskets Ob1 to Ob4, respectively.

The object acquisition detection unit 154 sets the basket Ob1 that has appeared from the ROI (place) as "target". The object acquisition detection unit 154 sets the basket Ob2 present in the region of the ROI as "excluded". Baskets to be excluded may become targets in the future and thus are treated as not present.

The object acquisition detection unit 154 sets the basket Ob3 that has appeared from the end of a screen as "non-target". The object acquisition detection unit 154 sets the basket Ob4 released from tracking as "non-target". The non-target baskets will not become targets in the future and thus are not to be counted.

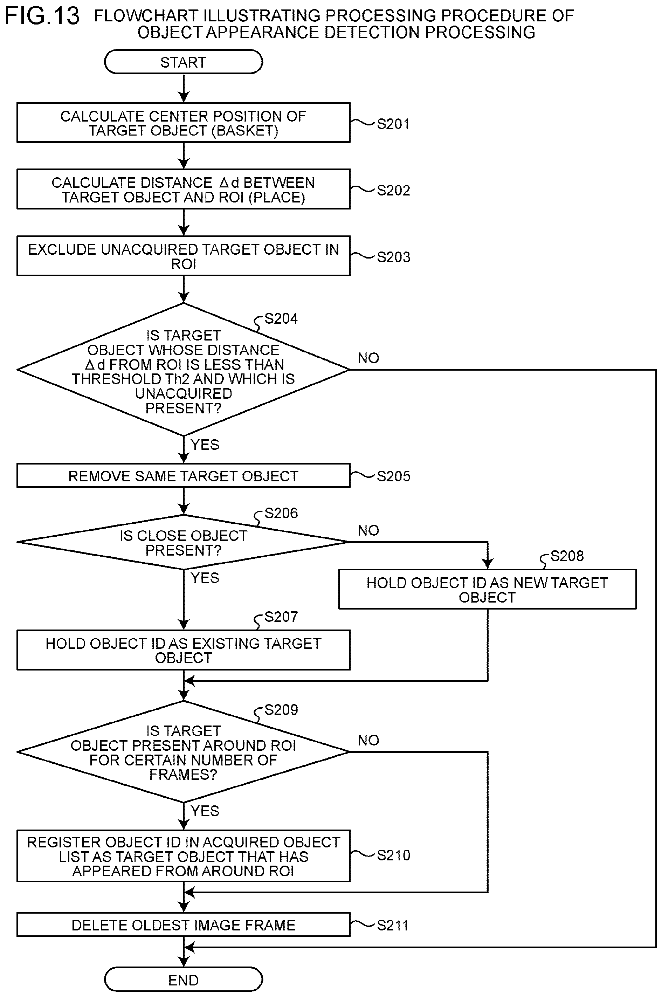

Next, an example of a processing procedure of the object appearance detection processing described in Step S106 of FIG. 11 will be described. FIG. 13 is a flowchart illustrating the processing procedure of the object appearance detection processing. As illustrated in FIG. 13, the object acquisition detection unit 154 calculates a center position of the target object (basket) (Step S201). The object acquisition detection unit 154 calculates a distance $\Delta d$ between the target object and the ROI (place) (Step S202).

The object acquisition detection unit 154 excludes an unacquired target object in the ROI (Step S203). The object acquisition detection unit 154 determines whether or not a target object whose distance $\Delta d$ from the ROI is less than a threshold Th2 and which is unacquired is present (Step S204). When the distance $\Delta d$ from the ROI is not less than the threshold Th2 or when no unacquired target object is present (Step S204, No), the object acquisition detection unit 154 ends the object appearance detection processing.

Meanwhile, when a target object whose distance $\Delta d$ from the ROI is less than the threshold Th2 and which is unacquired is present (Step S204, Yes), the object acquisition detection unit 154 removes the same target object (Step S205).

When a close target object is present (Step S206, Yes), the object acquisition detection unit 154 holds the object ID as an existing target object (Step S207) and proceeds to Step S209.

Meanwhile, when no close target object is present (Step S206, No), the object acquisition detection unit 154 holds the object ID as a new target object (Step S208) and proceeds to Step S209.

When no target object is present near the ROI for a certain number of frames (Step S209, No), the object acquisition detection unit 154 proceeds to Step S211.

Meanwhile, when the target object is present near the ROI for a certain number of frames (Step S209, Yes), the object acquisition detection unit 154 registers the object ID in the acquired object list 145 as a target object that has appeared from around the ROI (Step S210).

The object acquisition detection unit 154 deletes the oldest frame information from the acquired object list 145 (Step S211) and ends the object appearance detection processing.

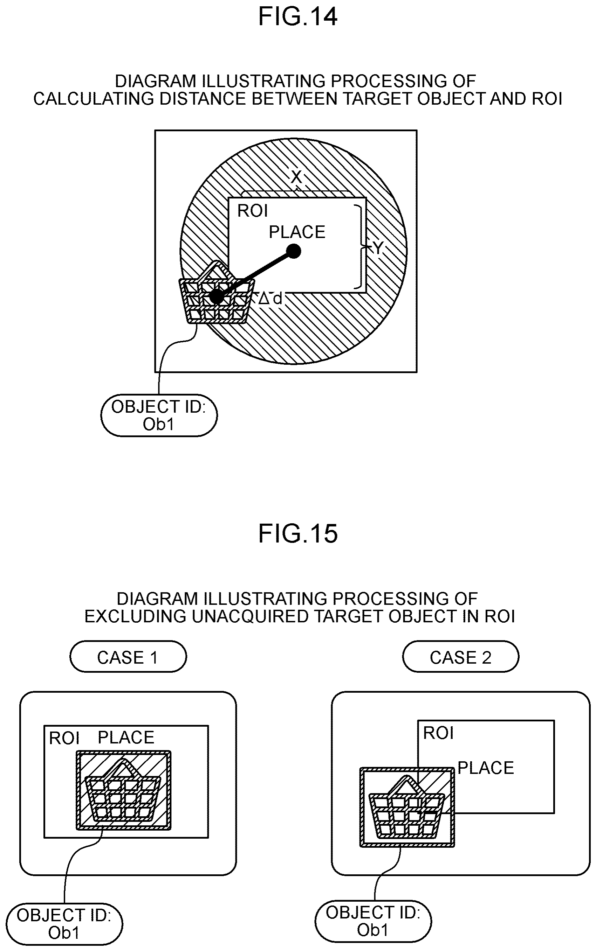

Next, an example of the processing of calculating the distance $\Delta d$ between the target object and the ROI (place) described in Step S202 of FIG. 13 will be described. FIG. 14 is a diagram illustrating the processing of calculating the distance between the target object and the ROI. The target object that has appeared from the ROI appears from a position near the ROI to some extent.

The object acquisition detection unit 154 calculates the distance $\Delta d$ between the center coordinates of the basket Ob1 and the center coordinates of the ROI. Note that the object acquisition detection unit 154 calculates the threshold Th2 on the basis of Equation (1). In Equation (1), "X" denotes a lateral width of the ROI. "Y" denotes a vertical width of the ROI. The threshold Th2 is used in Step S204 of FIG. 13. The threshold Th2 may be a value set in advance.

$$\text{Threshold Th2} = \max(X, Y) \times 2 \tag{1}$$

Next, an example of the processing of excluding an unacquired target object in the ROI described in Step S203 of FIG. 13 will be described. FIG. 15 is a diagram illustrating the processing of excluding an unacquired target object in the ROI.

The object acquisition detection unit 154 calculates an overlapping ratio on the basis of Equation (2). The object acquisition detection unit 154 "excludes" the basket as an unacquired target object in a case where the overlapping ratio is equal to or more than a threshold Th3. The threshold Th3 is set in advance.

$$\text{Overlapping ratio} = (\text{area of overlapping region between ROI region and basket region})/\text{area of basket region} \tag{2}$$

In a case 1 of FIG. 15, the overlapping ratio between the basket Ob1 (the basket whose object ID is "Ob1") and the ROI is 1 (100%). Therefore, the object acquisition detection unit 154 "excludes" the basket Ob1 as an unacquired target object. The unacquired target object in the ROI has not moved from the ROI, and thus the overlapping ratio with the ROI is equal to or more than the threshold Th3.

In a case 2 of FIG. 15, the overlapping ratio between the basket Ob1 (the basket whose object ID is "Ob1") and the ROI is less than the threshold Th3. Therefore, the object acquisition detection unit 154 does not "exclude" the basket Ob1 as an unacquired target object.

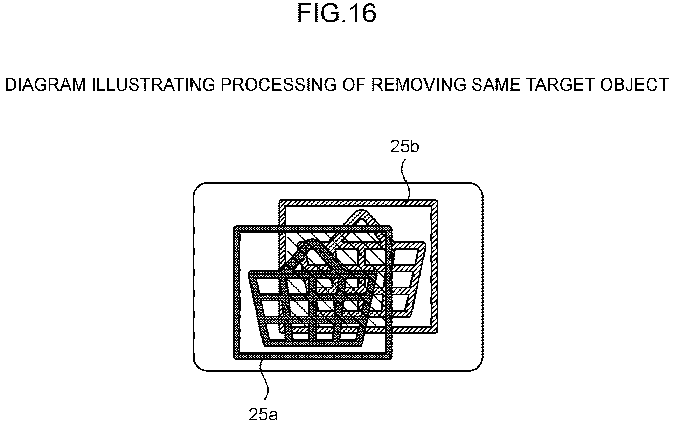

Next, the processing of removing the same target object described in Step S205 of FIG. 13 will be described. FIG. 16 is a diagram illustrating the processing of removing the same target object. The processing of deleting the same target object is processing of excluding an object that has once appeared from the ROI from being redundantly counted in a plurality of image frames.

In FIG. 16, a region 25a of a basket is detected from an image frame whose frame number is N, and a region 25b of a basket is detected from an image frame whose frame number is N-1. The regions 25a and 25b are bounding boxes of the target objects.

The object acquisition detection unit 154 calculates the overlapping ratio between the region 25a and the region 25b on the basis of Equation (3). In a case where the overlapping ratio is equal to or more than the threshold Th3, the object acquisition detection unit 154 treats the basket in the region 25a and the basket in the region 25b as the same basket. The threshold Th3 is set in advance.

$$\text{Overlapping ratio} = (\text{area of overlapping region between region 25a and region 25b})/\text{area of region 25a} \tag{3}$$

Next, an example of a countermeasure against instantaneous erroneous detection executed by the object acquisition detection unit 154 will be described. For example, a region of a basket is detected by using the third machine training model, but may be erroneously detected. Erroneous detection is likely to occur when there are many persons or target objects, for example, at the time of congestion. When performing a countermeasure against instantaneous erroneous detection, the object acquisition detection unit 154 can accurately count the number of baskets acquired from the ROI. Processing of the countermeasure against instantaneous erroneous detection, which is executed by the object acquisition detection unit 154, corresponds to the processing in Steps S209 to S211 in FIG. 13.

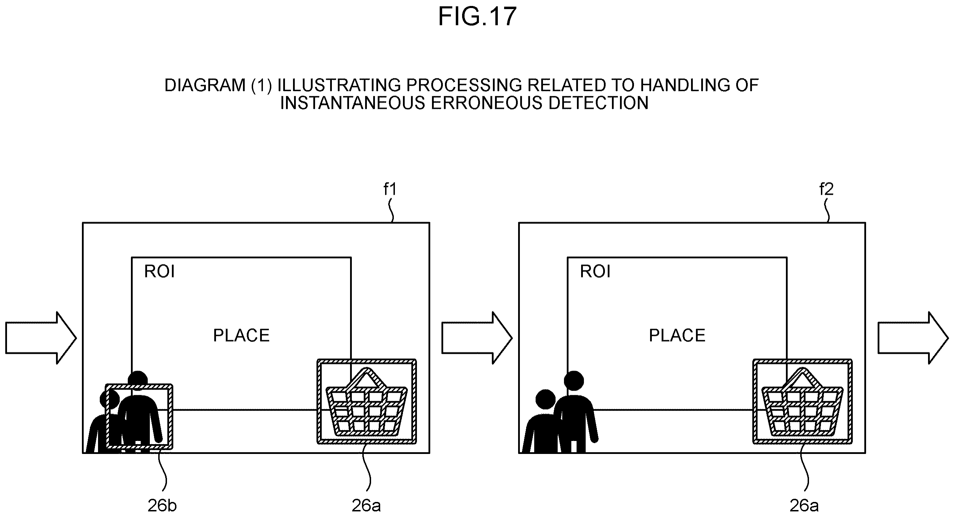

FIGS. 17, 18, and 19 are diagrams illustrating processing related to handling of instantaneous erroneous detection. Although depending on accuracy of the third machine training model, erroneous detection is instantaneous detection in many cases. First, FIG. 17 will be described. For example, a region 26a of a basket is detected from the image frame f1, and a region of a person is erroneously detected as a region 26b of a basket. Meanwhile, the region 26a of the basket is detected from the image frame f2.

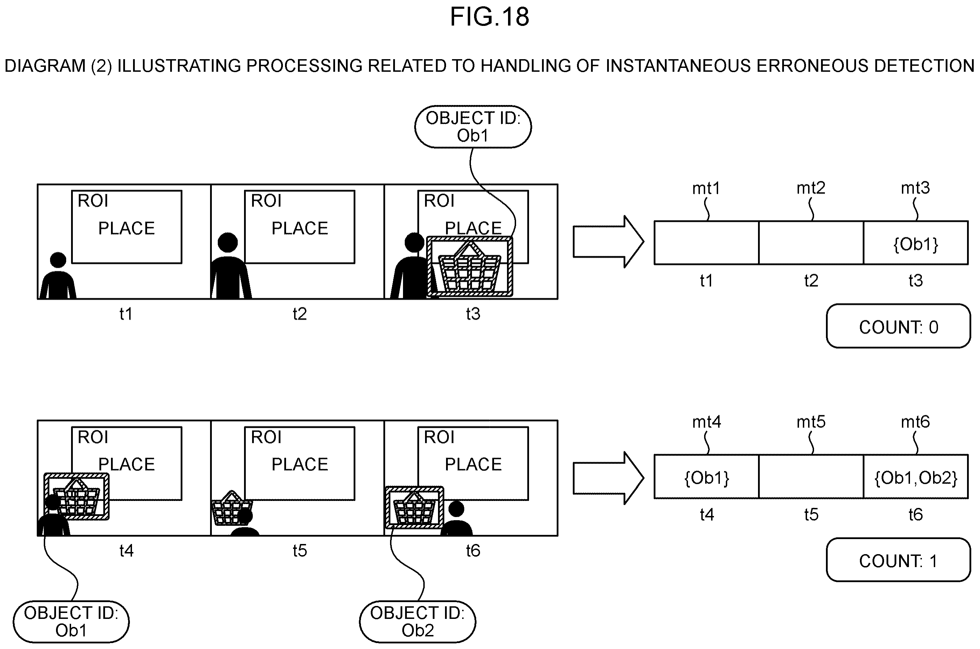

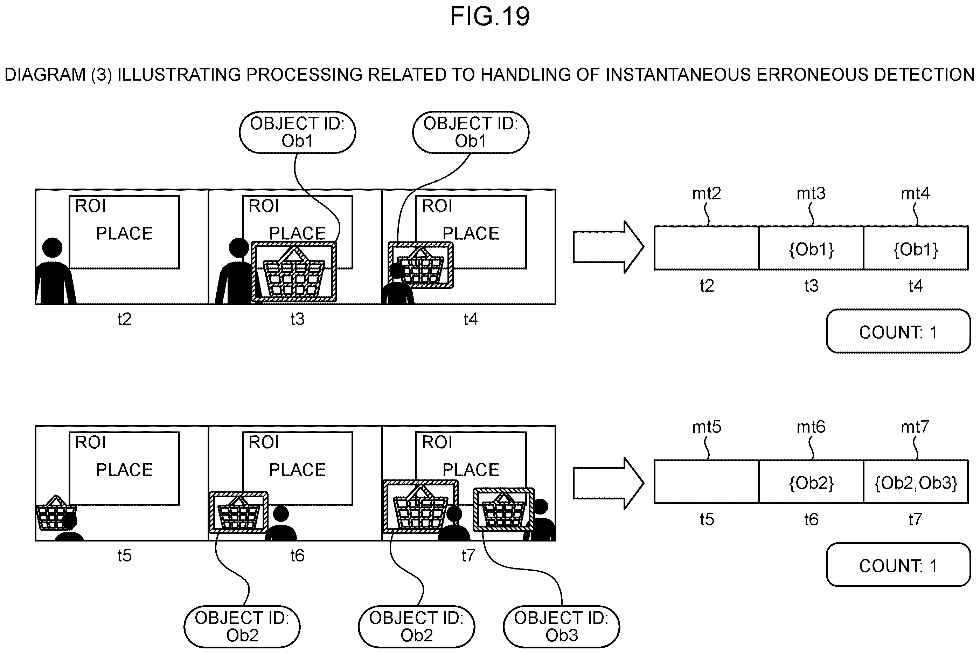

For example, the region of the target object is continuously detected, but erroneous detection is less likely to occur continuously. In order to handle instantaneous erroneous detection, the object acquisition detection unit 154 recognizes a basket near the ROI in each image frame and processes a target object present for a certain number of frames as a newly appeared basket. For example, the object acquisition detection unit 154 executes processing described below with reference to FIGS. 18 and 19.

FIG. 18 will be described. In FIG. 18, description will be made by using chronological image frames at times t1, t2, t3, t4, t5, and t6. Storage areas of the storage unit 140 corresponding to the times t1, t2, t3, t4, t5, and t6 are defined as storage areas mt1, mt2, mt3, mt4, mt5, and mt6.

The object acquisition detection unit 154 counts the number of appearing baskets with the number of image frames to be checked. The number of image frames to be checked is set to "3". The object acquisition detection unit 154 counts the number of times a certain basket appears in the image frames and counts the certain basket as one in a case where the counted number of times is equal to or more than half thereof (2 or more).

The object acquisition detection unit 154 performs the following processing on three image frames at the times t1 to t3. A region of the basket is not detected from the image frame at the time t1, and thus the object acquisition detection unit 154 registers nothing in the storage area mt1. The region of the basket is not detected from the image frame at the time t2, and thus the object acquisition detection unit 154 registers nothing in the storage area mt2. The region of the basket whose object ID is "Ob1" is detected from the image frame at the time t3, and thus the object acquisition detection unit 154 registers {Ob1} indicating that the region whose object ID is "Ob1" has been detected in the storage area mt3.

In the image frames at the times t1 to t3, the object acquisition detection unit 154 detects the region whose object ID is "Ob1", and the number of image frames in which the object ID "Ob1" has been detected is "1", which is less than half thereof. Therefore, the object acquisition detection unit 154 sets the count for the object ID "Ob1" to "0".

The object acquisition detection unit 154 performs the following processing on three image frames at the times t4 to t6. The region of the basket whose object ID is "Ob1" is detected from the image frame at the time t4. The region whose object ID is "Ob1" in the image frame at the time t4 is tracked from the region whose object ID is "Ob1" in the image frame at the time t3, and the same object ID is assigned. The object acquisition detection unit 154 registers {Ob1} indicating that the region whose object ID is "Ob1" has been detected in the storage area mt4.

Detection omission occurs in the image frame at the time t5, and the region of the basket is not detected, and thus the object acquisition detection unit 154 registers nothing in the storage area mt5.

The region of the basket whose object ID is "Ob2" is detected from the image frame at the time t6. Because tracking of the object ID "Ob1" at the times t3 and t4 is stopped at the time t5, a new object ID "Ob2" is set.

The object acquisition detection unit 154 calculates the overlapping ratio between the region whose object ID is "Ob1" at the time t4 and the region whose object ID is "Ob2" at the time t6 on the basis of Equation (3). In a case where the overlapping ratio is equal to or more than the threshold Th3, the object acquisition detection unit 154 registers {Ob1, Ob2} indicating that the basket whose object ID is "Ob1" at the time t4 and the basket whose object ID is "Ob2" at the time t6 are the same basket in the storage area mt6.

In the image frames at the times t4 to t6, the object acquisition detection unit 154 detects the region whose object ID is "Ob1 (Ob2)", and the number of image frames in which the object ID "Ob1 (Ob2)" has been detected is "2", which is equal to or more than half thereof. Therefore, the object acquisition detection unit 154 sets the count for the object ID "Ob1, Ob2" to "1". Note that the basket whose object ID is "Ob1" and the basket whose object ID is "Ob2" are the same basket.

FIG. 19 will be described. FIG. 19 illustrates each image frame after one frame from FIG. 18. The object acquisition detection unit 154 deletes the image frame at the oldest time t1.

In FIG. 19, description will be made by using chronological image frames at times t2, t3, t4, t5, t6, and t7. Storage areas of the storage unit 140 corresponding to the times t2, t3, t4, t5, t6, and t7 are defined as storage areas mt2, mt3, mt4, mt5, mt6, and mt7.

The object acquisition detection unit 154 performs the following processing on three image frames at the times t2 to t4. The region of the basket is not detected from the image frame at the time t2, and thus the object acquisition detection unit 154 registers nothing in the storage area mt2. The region of the basket whose object ID is "Ob1" is detected from the image frame at the time t3, and thus the object acquisition detection unit 154 registers {Ob1} indicating that the region whose object ID is "Ob1" has been detected in the storage area mt3. The region of the basket whose object ID is "Ob1" being tracked is detected from the image frame at the time t4, and thus the object acquisition detection unit 154 registers {Ob1} indicating that the region whose object ID is "Ob1" has been detected in the storage area mt4.

In the image frames at the times t2 to t4, the object acquisition detection unit 154 detects the region whose object ID is "Ob1", and the number of image frames in which the object ID "Ob1" has been detected is "2", which is equal to or more than half thereof. Therefore, the object acquisition detection unit 154 sets the count for the object ID "Ob1" to "1".

The object acquisition detection unit 154 performs the following processing on three image frames at the times t5 to t7. Detection omission occurs in the image frame at the time t5, and the region of the basket is not detected, and thus the object acquisition detection unit 154 registers nothing in the storage area mt5.

The region of the basket whose object ID is "Ob2" is detected from the image frame at the time t6. Because tracking of the object ID "Ob1" at the times t3 and t4 is stopped at the time t5, a new object ID "Ob2" is set. The object acquisition detection unit 154 registers {Ob2} indicating that the region whose object ID is "Ob2" has been detected in the storage area mt6.

The object acquisition detection unit 154 detects the region of the object ID "Ob2" being tracked and a region of a new object ID "Ob3" in the image frame at the time t7. The object acquisition detection unit 154 registers, in the storage area mt7, {Ob2} indicating that the region whose object ID is "Ob2" has been detected and {Ob3} indicating that the region whose object ID is "Ob3" has been detected.

The object acquisition detection unit 154 detects the region whose object ID is "Ob2" and the object ID "Ob3" in the image frames at the times t5 to t7. The number of image frames in which the object ID "Ob2" has been detected by the object acquisition detection unit 154 is "2", which is equal to or more than half thereof, and thus the object acquisition detection unit 154 sets the count for the object ID "Ob2" to "1". The number of image frames in which the object ID "Ob3" has been detected by the object acquisition detection unit 154 is "1", which is less than half thereof. Therefore, the object acquisition detection unit 154 sets the count for the object ID "Ob3" to "0".

The object acquisition detection unit 154 repeatedly executes processing of counting the number corresponding to each object ID again for subsequent image frames with the determined number of frames "3". For example, in the processing described with reference to FIGS. 18 and 19, it is registered in the storage unit 140 that the number of baskets acquired from the ROI is one with the object ID "Ob1", and the basket whose object ID is "Ob1" and the basket whose object ID is "Ob2" are the same basket. The object acquisition detection unit 154 registers a relationship between the object ID and the number of baskets acquired from the ROI in the acquired object list 145.

Next, an example of the object holding detection processing in Step S107 of FIG. 11 will be described. The object acquisition detection unit 154 compares the region of the basket detected from the image frame with the skeleton information of the person and detects that the person is holding the basket in a case where a predetermined joint of the skeleton information is included in the region of the basket. The object acquisition detection unit 154 registers the object ID corresponding to the basket and the person ID of the person in the acquired object list 145 in association with each other.

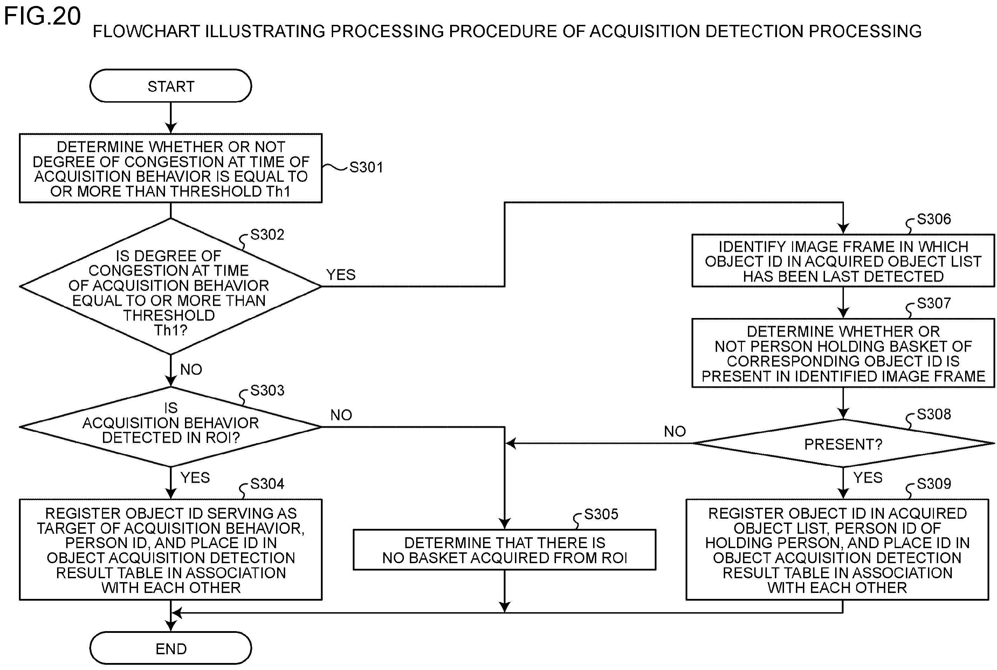

Next, an example of the acquisition detection processing in Step S108 of Fig. 11 will be described. FIG. 20 is a flowchart illustrating a processing procedure of the acquisition detection processing. As illustrated in FIG. 20, the object acquisition detection unit 154 determines whether or not the degree of congestion at the time of acquisition behavior is equal to or more than the threshold Th1 (Step S301). When the degree of congestion at the time of acquisition behavior is not equal to or more than the threshold Th1 (Step S302, No), the object acquisition detection unit 154 proceeds to Step S303. Meanwhile, when the degree of congestion at the time of acquisition behavior is equal to or more than the threshold Th1 (Step S302, Yes), the object acquisition detection unit 154 proceeds to Step S306.

The processing in Step S303 will be described. The object acquisition detection unit 154 determines whether or not an acquisition behavior in the ROI is detected (Step S303). When detecting an acquisition behavior in the ROI (Step S303, Yes), the object acquisition detection unit 154 registers the object ID, the person ID, and the place ID, which are targets of the acquisition behavior, in the object acquisition detection result table 144 in association with each other (Step S304).

Meanwhile, when not detecting an acquisition behavior in the ROI (Step S303, No), the object acquisition detection unit 154 determines that there is no basket acquired from the ROI (Step S305).

The processing in Step S306 will be described. The object acquisition detection unit 154 identifies an image frame in which the object ID of the acquired object list 145 has been last detected (Step S306). The object acquisition detection unit 154 determines whether or not a person holding a basket of the corresponding object ID is present in the acquired image frame (Step S307).

When a person holding the basket of the corresponding object ID is present in the image frame (Step S308, Yes), the object acquisition detection unit 154 proceeds to Step S309. Meanwhile, when a person holding the basket of the corresponding object ID is not present in the image frame (Step S308, No), the object acquisition detection unit 154 proceeds to Step S305.

The processing in Step S309 will be described. The object acquisition detection unit 154 registers the object ID of the acquired object list 145, the person ID of the holding person, and the place ID in the object acquisition detection result table 144 in association with each other (Step S309).

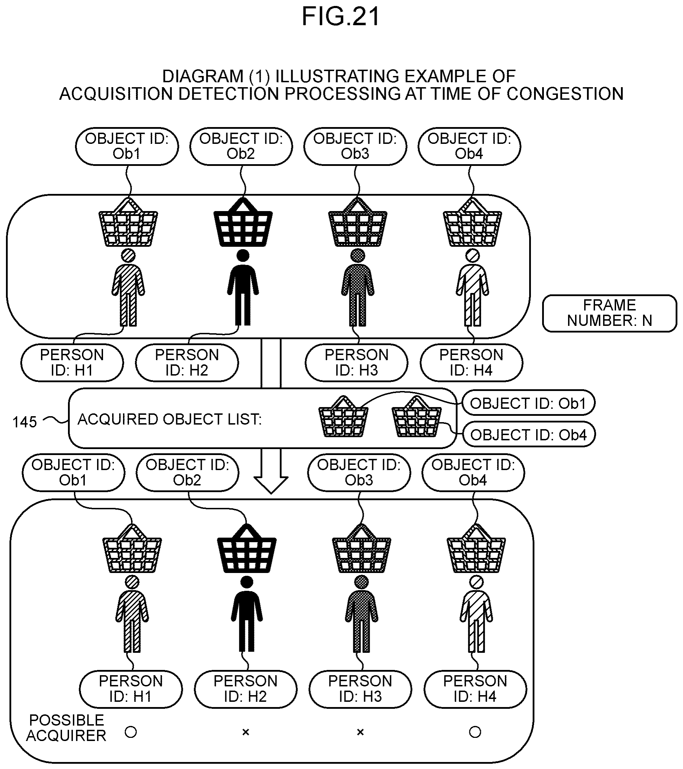

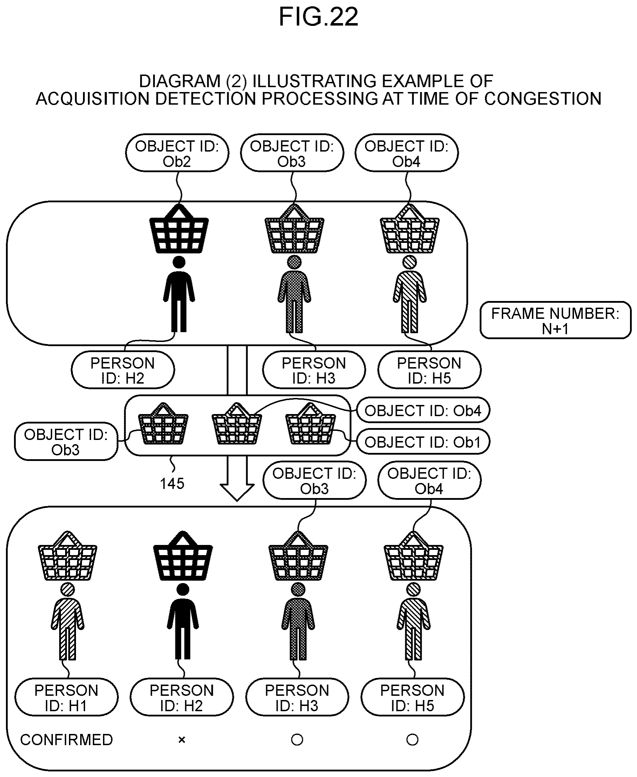

FIGS. 21 and 22 are diagrams illustrating an example of the acquisition detection processing at the time of congestion. First, FIG. 21 will be described. In FIG. 21, the object IDs "Ob1" and "Ob4" are registered in the acquired object list 145. For example, the object IDs registered in the acquired object list 145 are object IDs of baskets that have appeared from the periphery of the ROI at the time of congestion.

The object acquisition detection unit 154 detects baskets whose object IDs are "Ob1" to "Ob4" and persons whose person IDs are "H1" to "H4" in an image frame of the "frame number N". The baskets whose object IDs are "Ob1" to "Ob4" will be referred to as the baskets Ob1 to Ob4, respectively. The persons whose person IDs are "H1" to "H4" will be referred to as the persons H1 to H4, respectively.

For example, in the image frame of the "frame number N", the person H1 is holding the basket Ob1. The person H2 is holding the basket Ob2. The person H3 is holding the basket Ob3. The person H4 is holding the basket Ob4. When a basket holding state of each person is compared with the acquired object list 145, a possible person who has acquired the basket Ob1 from the ROI is the person H1. Further, a possible person who has acquired the basket Ob4 from the ROI is the person H4.

Description proceeds to FIG. 22. In FIG. 22, the object IDs "Ob1", "Ob3", and "Ob4" are registered in the acquired object list 145.

The object acquisition detection unit 154 detects baskets whose object IDs are "Ob2" to "Ob4" and persons whose person IDs are "H2" to "H4" in an image frame of the "frame number N+1". The basket Ob1 is not detected in the image frame of the "frame number N+1". The persons H1 and H4 are not detected, and a new person H5 is detected in the image frame of the frame number N+1, as compared with the image frame of the frame number N.

Here, the image frame in which the basket Ob1 registered in the acquired object list 145 has been last detected is the frame number N described in FIG. 21. Further, the person holding the basket Ob1 in the image frame of the frame number N is the person H1. Therefore, the object acquisition detection unit 154 confirms the person ID of the person who has acquired the basket Ob1 from the ROI as "H1". The object acquisition detection unit 154 registers the object ID "Ob1" and the person ID "H1" in the object acquisition detection result table 144 in association with each other.

The person H2 is holding the basket Ob2 in the image frame of the frame number N+1. The person H3 is holding the basket Ob3. The person H3 is holding the basket Ob3. The person H5 is holding the basket Ob4. When a basket holding state of each person is compared with the acquired object list 145, a possible person who has acquired the basket Ob3 from the ROI is the person H3. Further, a possible person who has acquired the basket Ob4 from the ROI is the person H5.

The object acquisition detection unit 154 repeatedly executes the above processing also for image frames of a frame number N+2 and subsequent frame numbers.

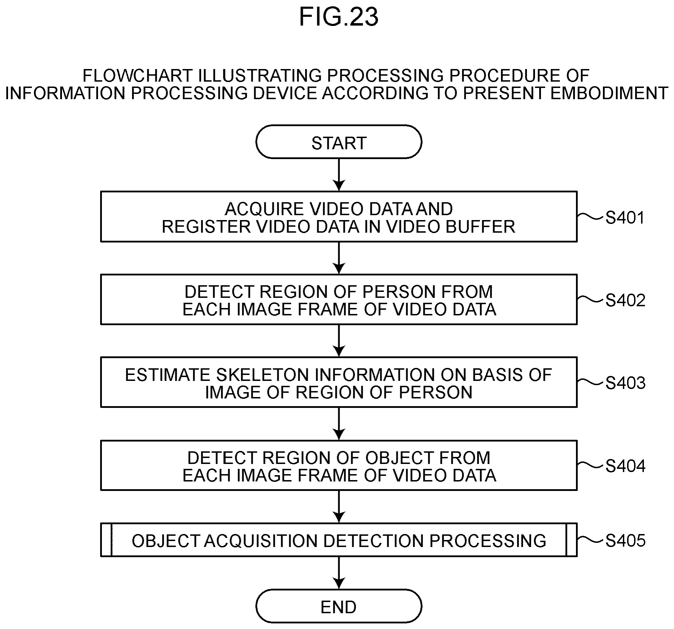

Next, an example of a processing procedure of the information processing device 100 according to the present embodiment will be described. FIG. 23 is a flowchart illustrating the processing procedure of the information processing device according to the present embodiment. As illustrated in FIG. 23, the acquisition unit 151 of the information processing device 100 acquires video data from the camera 10 and registers the video data in the video buffer 141 (Step S401).

The person detection unit 152 of the information processing device 100 detects a region of a person from each image frame of the video data (Step S402). The person detection unit 152 estimates skeleton information on the basis of an image of the region of the person (Step S403).

The object detection unit 153 of the information processing device 100 detects a region of an object from each image frame of the video data (Step S404). The object acquisition detection unit 154 of the information processing device 100 executes object acquisition detection processing (Step S405).

A processing procedure of the object acquisition detection processing in Step S405 of FIG. 23 corresponds to the processing procedure described in the object acquisition detection processing in FIG. 11.

Next, an effect of the information processing device 100 according to the present embodiment will be described. The information processing device 100 detects a basket that has appeared from the ROI by analyzing a first frame among the plurality of image frames included in the video data. When detecting a basket from the ROI, the information processing device 100 determines whether or not a person who has moved the basket out of a range of the ROI is identifiable on the basis of a congestion situation of the ROI. When determining that the person who has moved the basket out of the range of the ROI is not identifiable, the information processing device 100 identifies a person who has acquired the basket by analyzing a second image frame after the first image frame. The information processing device 100 registers the identified person as the person who has moved the basket out of the range of the ROI in the storage unit 140 in association with the object that has appeared from the ROI. This makes it possible to appropriately associate the basket that has appeared from the ROI with the person who has moved the basket out of the range of the ROI.

In a case where a ratio of a region of the person to the ROI is equal to or more than a predetermined ratio, the information processing device 100 determines that the person who has moved the basket out of the range of the ROI is not identifiable. Therefore, it is possible to appropriately determine whether or not the person who has moved the basket out of a range of a region of interest such as the ROI is identifiable.

The information processing device 100 performs processing of tracking an object detected from the first image frame to the second image frame. In a case where a region of the basket included in the second image frame overlaps a partial region of a certain person (e.g. person H1), the information processing device 100 identifies the certain person (e.g. person H1) as a person using the basket. This makes it possible to appropriately associate the basket that has appeared from the ROI with the person who has moved the basket out of the range of the ROI.

The information processing device 100 compares regions of baskets that have intermittently appeared in consecutive frames, and in a case where the regions of the baskets overlap, treats the baskets that have intermittently appeared as the same object. This makes it possible to prevent the same basket from being treated as different baskets.

The information processing device 100 detects the basket that has appeared from the region of the ROI on the basis of a degree of overlap between the region of the basket and the region of the ROI and a distance between the basket and the region of the ROI. This makes it possible to appropriately detect the basket that has appeared from the ROI.

Next, a typical pattern of erroneous detection occurring at the time of congestion according to the conventional technology and an effect of the present invention will be described. A device that performs processing of the conventional technology will be referred to as a "conventional device". In the following description, a person whose person ID is "H*" will be appropriately referred to as a "person H*", and a basket whose object ID is "Ob*" will be appropriately referred to as a "basket Ob*". Any number is set to "*".

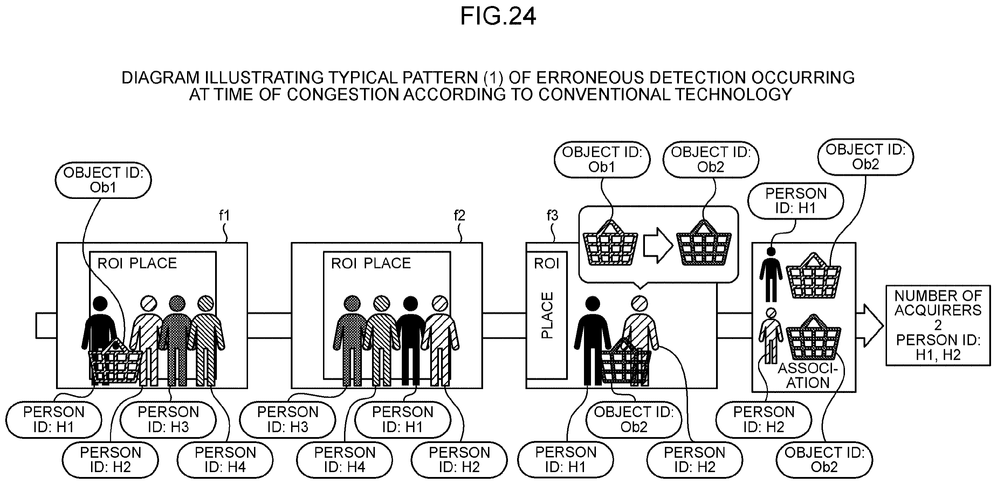

FIG. 24 is a diagram illustrating a typical pattern (1) of erroneous detection occurring at the time of congestion according to the conventional technology.

First, processing of the conventional device for the image frame f1 will be described. The conventional device detects acquisition behaviors of the persons H1 to H4 in the image frame f1. The acquisition behavior of the person H1 is correctly detected, and the acquisition behaviors of the persons H2 to H4 are erroneously detected. The conventional device detects that the person H1 has acquired the basket Ob1 in the image frame f1. Thus, the conventional device associates the person ID "H1" with the object ID "Ob1".

Processing of the conventional device for the image frame f2 will be described. The conventional device tracks the persons H1 to H4 and the basket Ob1. In the image frame f2, the basket Ob1 is hidden in the regions of the persons H1 to H4, and tracking of the basket Ob1 is stopped.

Processing of the conventional device for the image frame f3 will be described. The conventional device tracks the persons H1 and H2 included in the image frame f3. Further, the conventional device detects the basket Ob2 and detects that the person H2 has acquired the basket Ob2. Because the tracking of the basket Ob1 is stopped in the image frame f2, the conventional device treats the basket Ob2 as a basket different from the basket Ob1 even if the basket Ob1 and the basket Ob2 are the same basket. The conventional device associates the person ID "H2" with the object ID "Ob2".

As described with reference to FIG. 24, the person H1 has actually acquired the basket Ob1, and thus it is correct to associate the person ID "H1" with the object ID "Ob1". However, the conventional technology associates the person ID "H1" with the object ID "Ob1" and further associates the person ID "H2" with the object ID "Ob2". Thus, two baskets are registered as if the two baskets have been acquired by two persons.

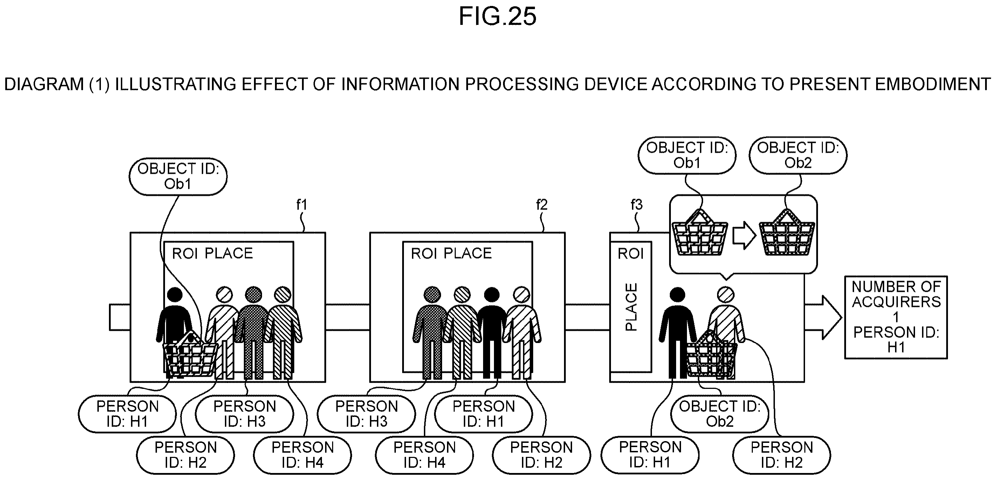

FIG. 25 is a diagram (1) illustrating an effect of the information processing device according to the present embodiment. The image frames f1 to f3 in FIG. 25 are the same as the image frames f1 to f3 in FIG. 24.

First, processing of the information processing device 100 for the image frame f1 will be described. The information processing device 100 detects the persons H1 to H4 from the image frame f1. The information processing device 100 detects the basket Ob1 that has appeared from the ROI and registers the basket Ob1 in the acquired object list 145.

Processing of the information processing device 100 for the image frame f2 will be described. The information processing device 100 tracks the persons H1 to H4 and the basket Ob1. In the image frame f2, the basket Ob1 is hidden in the regions of the persons H1 to H4, and tracking of the basket Ob1 is stopped.

Processing of the information processing device 100 for the image frame f3 will be described. The information processing device 100 tracks the persons H1 and H2 included in the image frame f3. Further, the information processing device 100 detects the basket Ob2. Here, the distance $\Delta d$ between the basket Ob2 and the ROI is equal to or more than the threshold Th2, and thus the information processing device 100 processes the basket Ob2 as "non-target". Therefore, the information processing device 100 can register the number of baskets acquired from the ROI as being "1" in the acquired object list 145.

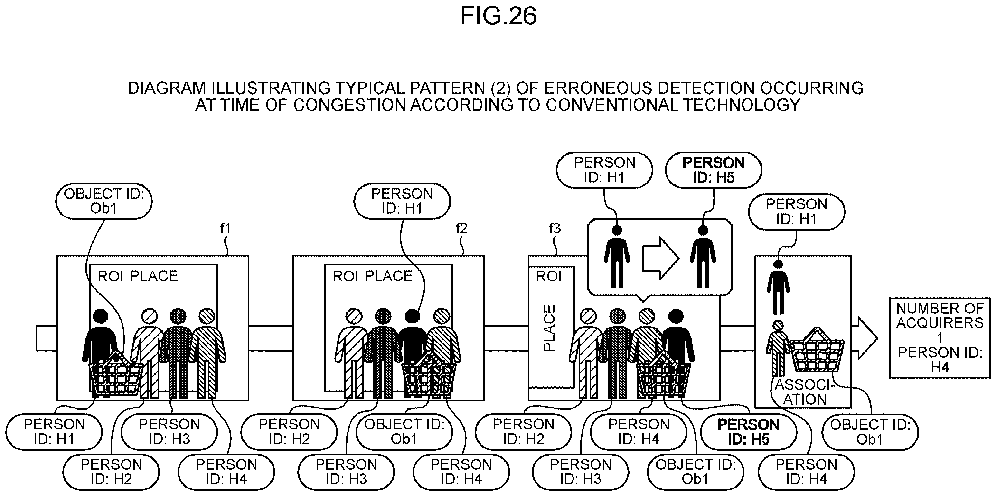

FIG. 26 is a diagram illustrating a typical pattern (2) of erroneous detection occurring at the time of congestion according to the conventional technology.

First, processing of the conventional device for the image frame f1 will be described. The conventional device detects the persons H1 to H4 in the image frame f1. The conventional device is executing acquisition detection of the basket Ob1 (has not detected a person who has acquired the basket Ob1).

Processing of the conventional device for the image frame f2 will be described. The conventional device tracks the persons H3 to H4 and the basket Ob1. Here, the person H1 is hidden in the regions of the persons H2 to H4, and tracking of the person H1 is stopped. Further, the conventional device erroneously detects the owner of the basket Ob1 as the person H4 and associates the person ID "H4" with the object ID "Ob1".

Processing of the conventional device for the image frame f3 will be described. The conventional device tracks the persons H3 to H4 and the basket Ob1. Further, the conventional device detects the person H5. Because the tracking of the person H1 is stopped in the image frame f2, the conventional device treats the person H5 as a person different from the person H1 even if the person H1 and the person H5 are the same person.

Although the person H1 has actually acquired the basket Ob1, the person ID "H4" and the object ID "Ob1" are erroneously associated with each other in the example described with reference to FIG. 26.

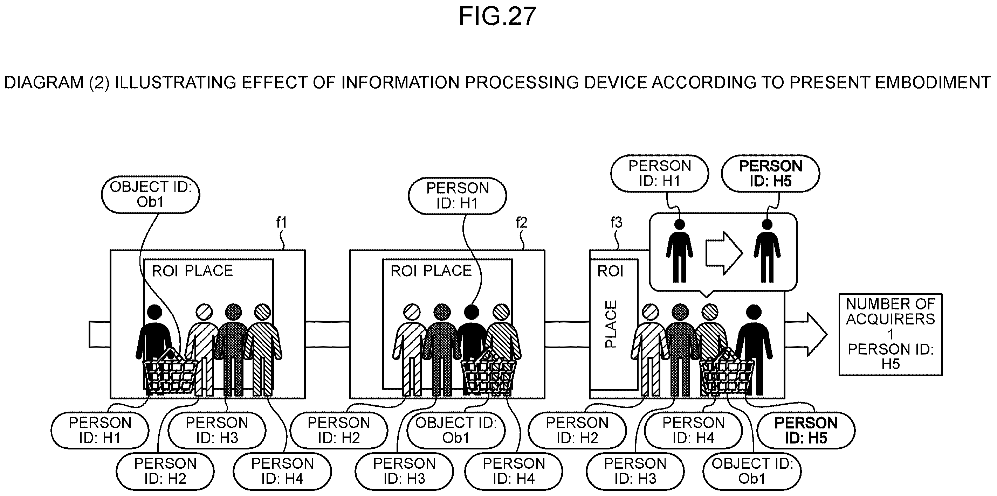

FIG. 27 is a diagram (2) illustrating an effect of the information processing device according to the present embodiment. The image frames f1 to f3 in FIG. 27 are the same as the image frames f1 to f3 in FIG. 26.

First, processing of the information processing device 100 for the image frame f1 will be described. The information processing device 100 detects the persons H1 to H4 from the image frame f1. The information processing device 100 detects the basket Ob1 that has appeared from the ROI and registers the basket Ob1 in the acquired object list 145.

Processing of the information processing device 100 for the image frame f2 will be described. The information processing device 100 tracks the persons H1 to H4 and the basket Ob1. Here, in the image frame f2, the person H1 is hidden in the regions of the persons H2 to H4, and tracking of the person H1 is stopped.

Processing of the information processing device 100 for the image frame f3 will be described. The information processing device 100 tracks the persons H2 to H4 included in the image frame f3. The information processing device 100 newly detects the person H5 and detects the person H5 as the owner of the basket Ob1. Here, although the person ID is changed from "H1" to "H5", the object ID Ob1 and the person ID of the person who has acquired the basket Ob1 from the ROI can be appropriately associated with each other.

Next, an example of a hardware configuration of a computer that implements functions similar to those of the above information processing device 100 will be described.

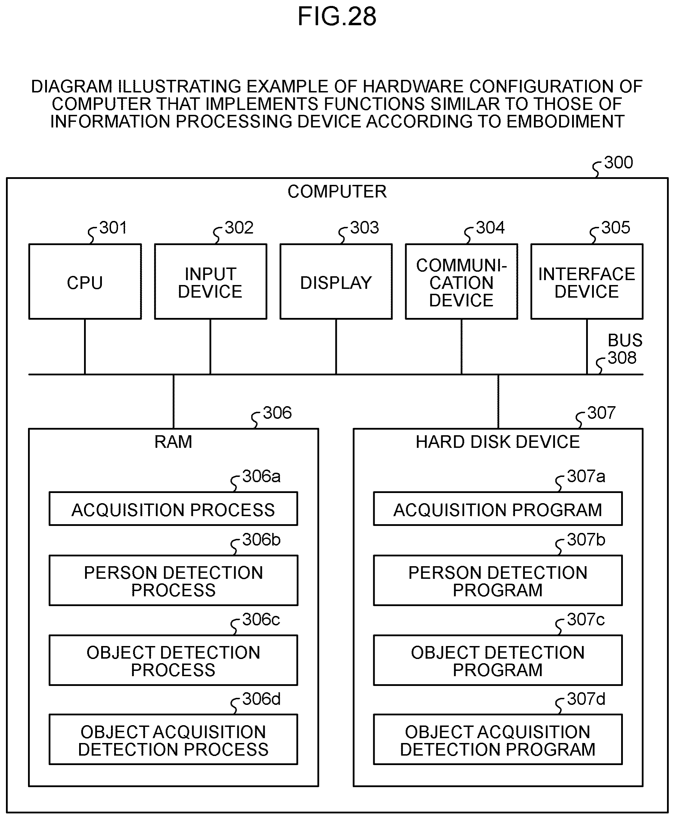

FIG. 28 is a diagram illustrating an example of a hardware configuration of a computer that implements functions similar to those of the information processing device according to the embodiment.

As illustrated in FIG. 28, a computer 300 includes a CPU 301 that executes various types of arithmetic processing, an input device 302 that receives an input of data from a user, and a display 303. The computer 300 further includes a communication device 304 that exchanges data with an external device or the like via a wired or wireless network and an interface device 305. The computer 300 further includes a RAM 306 that temporarily stores various types of information and a hard disk device 307. The devices 301 to 307 are connected to a bus 308.

The hard disk device 307 includes an acquisition program 307a, a person detection program 307b, an object detection program 307c, and an object acquisition detection program 307d. The CPU 301 reads the programs 307a to 307d and develops the programs in the RAM 306.

The acquisition program 307a functions as an acquisition process 306a. The person detection program 307b functions as a person detection process 306b. The object detection program 307c functions as an object detection process 306c. The object acquisition detection program 307d functions as an object acquisition detection process 306d.

Processing of the acquisition process 306a corresponds to the processing of the acquisition unit 151. Processing of the person detection process 306b corresponds to the processing of the person detection unit 152. Processing of the object detection process 306c corresponds to the processing of the object detection unit 153. Processing of the object acquisition detection process 306d corresponds to the processing of the object acquisition detection unit 154.

The programs 307a to 307d do not necessarily need to be stored in the hard disk device 307 from the beginning. For example, each program is stored in a "portable physical medium" such as a flexible disk (FD), a CD-ROM, a DVD, a magneto-optical disk, or an IC card inserted into the computer 300. Then, the computer 300 may read and execute the programs 307a to 307d.

Regarding embodiments including the above embodiments, the following supplementary notes are further disclosed.

(Supplementary note 1) A detection program for causing a computer to execute processing of:

acquiring a video in which a region of interest where an object is located is set;
detecting an object that has appeared from the region of interest by analyzing a first frame among a plurality of frames included in the acquired video;
in a case where the appearance of the object from the region of interest is detected, determining whether or not a person who has moved the object out of a range of the region of interest is identifiable;
in a case where it is determined that the person who has moved the object is not identifiable, identifying a person using the object by analyzing a second frame after the first frame; and
registering the identified person using the object as the person who has moved the object out of the range of the region of interest in a storage unit in association with the object that has appeared from the region of interest.

(Supplementary note 2) The detection program according to supplementary note 1, in which in the determining processing, in a case where a ratio of a region of the person to the region of interest is equal to or more than a predetermined ratio, it is determined that the person who has moved the object out of the range of the region of interest is not identifiable.

(Supplementary note 3) The detection program according to supplementary note 1, in which:

the detection program causes the computer to further execute processing of tracking the object detected from the first frame to the second frame; and
in the processing of identifying the person, in a case where a region of the object included in the second frame overlaps a partial region of a certain person, the certain person is identified as the person using the object.

(Supplementary note 4) The detection program according to supplementary note 3, in which in the tracking processing, in a case where regions of objects that have intermittently appeared in consecutive frames are compared and the regions of the objects overlap, the objects that have intermittently appeared are treated as the same object.

(Supplementary note 5) The detection program according to supplementary note 1, in which in the processing of detecting the object, the object that has appeared from the region of interest is detected on the basis of a degree of overlap between a region of the object and the region of interest and a distance between the object and the region of interest.

(Supplementary note 6) A detection method, in which a computer executes processing of:

acquiring a video in which a region of interest where an object is located is set;

detecting an object that has appeared from the region of interest by analyzing a first frame among a plurality of frames included in the acquired video;

in a case where the appearance of the object from the region of interest is detected, determining whether or not a person who has moved the object out of a range of the region of interest is identifiable;

in a case where it is determined that the person who has moved the object is not identifiable, identifying a person using the object by analyzing a second frame after the first frame; and

registering the identified person using the object as the person who has moved the object out of the range of the region of interest in a storage unit in association with the object that has appeared from the region of interest.

(Supplementary note 7) The detection method according to supplementary note 6, in which in the determining processing, in a case where a ratio of a region of the person to the region of interest is equal to or more than a predetermined ratio, it is determined that the person who has moved the object out of the range of the region of interest is not identifiable.

(Supplementary note 8) The detection method according to supplementary note 6, in which:

the computer further executes processing of tracking the object detected from the first frame to the second frame; and

in the processing of identifying the person, in a case where a region of the object included in the second frame overlaps a partial region of a certain person, the certain person is identified as the person using the object.

(Supplementary note 9) The detection method according to supplementary note 8, in which in the tracking processing, in a case where regions of objects that have intermittently appeared in consecutive frames are compared and the regions of the objects overlap, the objects that have intermittently appeared are treated as the same object.

(Supplementary note 10) The detection method according to supplementary note 6, in which in the processing of detecting the object, the object that has appeared from the region of interest is detected on the basis of a degree of overlap between a region of the object and the region of interest and a distance between the object and the region of interest.

(Supplementary note 11) An information processing device including a control unit that executes processing of:

acquiring a video in which a region of interest where an object is located is set;

detecting an object that has appeared from the region of interest by analyzing a first frame among a plurality of frames included in the acquired video;

in a case where the appearance of the object from the region of interest is detected, determining whether or not a person who has moved the object out of a range of the region of interest is identifiable;

in a case where it is determined that the person who has moved the object is not identifiable, identifying a person using the object by analyzing a second frame after the first frame; and

registering the identified person using the object as the person who has moved the object out of the range of the region of interest in a storage unit in association with the object that has appeared from the region of interest.

(Supplementary note 12) The information processing device according to supplementary note 11, in which in the determining processing, in a case where a ratio of a region of the person to the region of interest is equal to or more than a predetermined ratio, it is determined that the person who has moved the object out of the range of the region of interest is not identifiable.

(Supplementary note 13) The information processing device according to supplementary note 11, in which:

the control unit further executes processing of tracking the object detected from the first frame to the second frame; and

in the processing of identifying the person, in a case where a region of the object included in the second frame overlaps a partial region of a certain person, the certain person is identified as the person using the object.

(Supplementary note 14) The information processing device according to supplementary note 13, in which in the tracking processing, in a case where regions of objects that have intermittently appeared in consecutive frames are compared and the regions of the objects overlap, the objects that have intermittently appeared are treated as the same object.

(Supplementary note 15) The information processing device according to supplementary note 11, in which in the processing of detecting the object, the object that has appeared from the region of interest is detected on the basis of a degree of overlap between a region of the object and the region of interest and a distance between the object and the region of interest.

Explanation of Reference

| | |
|---|---|
| 100 | INFORMATION PROCESSING DEVICE |
| 110 | COMMUNICATION UNIT |
| 120 | INPUT UNIT |
| 130 | DISPLAY UNIT |
| 140 | STORAGE UNIT |
| 141 | VIDEO BUFFER |
| 142 | PERSON DETECTION RESULT TABLE |
| 143 | OBJECT DETECTION RESULT TABLE |
| 144 | OBJECT ACQUISITION DETECTION RESULT TABLE |
| 145 | ACQUIRED OBJECT LIST |
| 150 | CONTROL UNIT |
| 151 | ACQUISITION UNIT |
| 152 | PERSON DETECTION UNIT |
| 153 | OBJECT DETECTION UNIT |
| 154 | OBJECT ACQUISITION DETECTION UNIT |

**Claims**

1. A detection program that causes a computer to execute a process comprising:

   acquiring a video in which a region of interest where an object is located is set;
   detecting an object that has appeared from the region of interest by analyzing a first frame among a plurality of frames included in the acquired video;
   in a case where the appearance of the object from the region of interest is detected, determining whether or not a person who has moved the object out of a range of the region of interest is identifiable;
   in a case where it is determined that the person who has moved the object is not identifiable, identifying a person using the object by analyzing a second frame after the first frame; and
   registering the identified person using the object as the person who has moved the object out of the range of the region of interest in a storage unit in association with the object that has appeared from the region of interest.

2. The detection program according to claim 1, wherein in the determining processing, in a case where a ratio of a region of the person to the region of interest is equal to or more than a predetermined ratio, it is determined that the person who has moved the object out of the range of the region of interest is not identifiable.

3. The detection program according to claim 1, wherein:

   the detection program causes the computer to further execute the process including tracking the object detected from the first frame to the second frame; and
   in the processing of identifying the person, in a case where a region of the object included in the second frame overlaps a partial region of a certain person, the certain person is identified as the person using the object.

4. The detection program according to claim 3, wherein in the tracking processing, in a case where regions of objects that have intermittently appeared in consecutive frames are compared and the regions of the objects overlap, the objects that have intermittently appeared are treated as the same object.

5. The detection program according to claim 1, wherein in the processing of detecting the object, the object that has appeared from the region of interest is detected based on a degree of overlap between a region of the object and the region of interest and a distance between the object and the region of interest.

6. A detection method, wherein a computer executes processing of:

acquiring a video in which a region of interest where an object is located is set;
detecting an object that has appeared from the region of interest by analyzing a first frame among a plurality of frames included in the acquired video;
in a case where the appearance of the object from the region of interest is detected, determining whether or not a person who has moved the object out of a range of the region of interest is identifiable;
in a case where it is determined that the person who has moved the object is not identifiable, identifying a person using the object by analyzing a second frame after the first frame; and
registering the identified person using the object as the person who has moved the object out of the range of the region of interest in a storage unit in association with the object that has appeared from the region of interest.

7. The detection method according to claim 6, wherein in the determining processing, in a case where a ratio of a region of the person to the region of interest is equal to or more than a predetermined ratio, it is determined that the person who has moved the object out of the range of the region of interest is not identifiable.

8. The detection method according to claim 6, wherein:

the computer further executes processing of tracking the object detected from the first frame to the second frame; and
in the processing of identifying the person, in a case where a region of the object included in the second frame overlaps a partial region of a certain person, the certain person is identified as the person using the object.

9. The detection method according to claim 8, wherein in the tracking processing, in a case where regions of objects that have intermittently appeared in consecutive frames are compared and the regions of the objects overlap, the objects that have intermittently appeared are treated as the same object.

10. The detection method according to claim 6, wherein in the processing of detecting the object, the object that has appeared from the region of interest is detected based on a degree of overlap between a region of the object and the region of interest and a distance between the object and the region of interest.

11. An information processing device comprising a control unit configured to:

acquire a video in which a region of interest where an object is located is set;
detect an object that has appeared from the region of interest by analyzing a first frame among a plurality of frames included in the acquired video;
in a case where the appearance of the object from the region of interest is detected, determine whether or not a person who has moved the object out of a range of the region of interest is identifiable;
in a case where it is determined that the person who has moved the object is not identifiable, identify a person using the object by analyzing a second frame after the first frame; and
register the identified person using the object as the person who has moved the object out of the range of the region of interest in a storage unit in association with the object that has appeared from the region of interest.

12. The information processing device according to claim 11, wherein in the determining processing, in a case where a ratio of a region of the person to the region of interest is equal to or more than a predetermined ratio, it is determined that the person who has moved the object out of the range of the region of interest is not identifiable.

13. The information processing device according to claim 11, wherein:

the control unit is configured to further track the object detected from the first frame to the second frame; and
in the processing of identifying the person, in a case where a region of the object included in the second frame overlaps a partial region of a certain person, the certain person is identified as the person using the object.

14. The information processing device according to claim 13, wherein in the tracking processing, in a case where regions of objects that have intermittently appeared in consecutive frames are compared and the regions of the objects overlap, the objects that have intermittently appeared are treated as the same object.

15. The information processing device according to claim 11, wherein in the processing of detecting the object, the object that has appeared from the region of interest is detected based on a degree of overlap between a region of the object and the region of interest and a distance between the object and the region of interest.

# FIG.1

DIAGRAM ILLUSTRATING EXAMPLE OF DETECTION SYSTEM ACCORDING TO PRESENT EMBODIMENT

# FIG.2

DIAGRAM (1) ILLUSTRATING PROCESSING OF INFORMATION PROCESSING DEVICE ACCORDING TO PRESENT EMBODIMENT

EP 4 651 078 A1

# FIG.3

DIAGRAM (2) ILLUSTRATING PROCESSING OF
INFORMATION PROCESSING DEVICE ACCORDING TO PRESENT EMBODIMENT

f1

ROI

PLACE

AFTER
N FRAMES

f1+N

ROI

PLACE

PERSON ID:
H1

OBJECT ID:
Ob1

PERSON ID:
H1

# FIG.4

DIAGRAM ILLUSTRATING EFFECT OF INFORMATION PROCESSING DEVICE ACCORDING TO PRESENT EMBODIMENT

EP 4 651 078 A1

# FIG.5

FUNCTIONAL BLOCK DIAGRAM ILLUSTRATING CONFIGURATION OF
INFORMATION PROCESSING DEVICE ACCORDING TO PRESENT EMBODIMENT

# FIG.6

DIAGRAM ILLUSTRATING EXAMPLE OF DATA STRUCTURE OF
PERSON DETECTION RESULT TABLE

142

| FRAME NUMBER | PER-SON ID | PERSON REGION | SKELETON INFORMATION |
|---|---|---|---|
| 1001 | H1 | REGION OF PERSON ID "H1" | SKELETON INFORMATION OF PERSON ID "H1" |
| | H2 | REGION OF PERSON ID "H2" | SKELETON INFORMATION OF PERSON ID "H2" |
| | H3 | REGION OF PERSON ID "H3" | SKELETON INFORMATION OF PERSON ID "H3" |
| | H4 | REGION OF PERSON ID "H4" | SKELETON INFORMATION OF PERSON ID "H4" |
| 1002 | ... | ... | ... |
| 1003 | ... | ... | ... |
| ... | ... | ... | ... |

# FIG.7

## DIAGRAM ILLUSTRATING EXAMPLE OF HUMAN BODY MODEL

# FIG.8

DIAGRAM ILLUSTRATING EXAMPLE OF JOINT NAMES

| SYMBOL | JOINT NAME |
|--------|------------|
| ar0 | SPINE_BASE |
| ar1 | SPINE_MID |
| ar2 | SPINE_SHOULDER |
| ar3 | HEAD |
| ar4 | SHOULDER_LEFT |
| ar5 | ELBOW_LEFT |
| ar6 | WRIST_LEFT |
| ar7 | SHOULDER_RIGHT |
| ar8 | ELBOW_RIGHT |
| ar9 | WRIST_RIGHT |
| ar10 | HIP_LEFT |
| ar11 | KNEE_LEFT |
| ar12 | ANKLE_LEFT |
| ar13 | FOOT_LEFT |
| ar14 | HIP_RIGHT |
| ar15 | KNEE_RIGHT |
| ar16 | ANKLE_RIGHT |
| ar17 | FOOT_RIGHT |
| ar18 | NECK |
| ar19 | HAND_TIP_LEFT |
| ar20 | HAND_TIP_RIGHT |

# FIG.9

DIAGRAM ILLUSTRATING EXAMPLE OF DATA STRUCTURE OF
OBJECT DETECTION RESULT TABLE

⌐143

| FRAME NUMBER | OBJECT ID | OBJECT REGION |
|---|---|---|
| 1031 | Ob1 | REGION OF OBJECT ID "Ob1" |
| | Ob2 | REGION OF OBJECT ID "Ob2" |
| 1032 | Ob1 | REGION OF OBJECT ID "Ob1" |
| | Ob2 | REGION OF OBJECT ID "Ob2" |
| 1033 | ... | ... |
| ... | ... | ... |

# FIG.10

DIAGRAM ILLUSTRATING EXAMPLE OF DATA STRUCTURE OF
OBJECT ACQUISITION DETECTION RESULT TABLE

⌐144

| PLACE ID | OBJECT ID | PERSON ID |
|---|---|---|
| R1 | Ob1 | H6 |
| | Ob2 | H1 |
| R2 | Ob10 | H20 |
| | Ob11 | H31 |
| R3 | ... | ... |
| ... | ... | ... |

EP 4 651 078 A1

# FIG.11

FLOWCHART ILLUSTRATING PROCESSING PROCEDURE OF
OBJECT ACQUISITION DETECTION PROCESSING

START

ACQUISITION BEHAVIOR DETECTION PROCESSING —S101

S102 IS ACQUISITION BEHAVIOR DETECTED IN LATEST IMAGE FRAME? — NO

YES

HOLD PERSON ID OF PERSON WHOSE ACQUISITION BEHAVIOR HAS BEEN DETECTED AND OBJECT ID OF BASKET SERVING AS ACQUISITION TARGET IN ASSOCIATION WITH EACH OTHER —S103

CALCULATE DEGREE OF CONGESTION AROUND ROI —S104

S105 IS DEGREE OF CONGESTION EQUAL TO OR MORE THAN THRESHOLD Th1? — YES

NO S107

OBJECT HOLDING DETECTION PROCESSING

OBJECT APPEARANCE DETECTION PROCESSING S106

ACQUISITION DETECTION PROCESSING —S108

END

28

# FIG.12

DIAGRAM ILLUSTRATING EXAMPLE OF
OBJECT APPEARANCE DETECTION PROCESSING

ROI

PLACE

NON-TARGET

EXCLUDED

TARGET

NON-TARGET

OBJECT ID:
Ob3

OBJECT ID:
Ob2

OBJECT ID:
Ob1

OBJECT ID:
Ob4

FIG.13 FLOWCHART ILLUSTRATING PROCESSING PROCEDURE OF OBJECT APPEARANCE DETECTION PROCESSING

START

CALCULATE CENTER POSITION OF TARGET OBJECT (BASKET) — S201

CALCULATE DISTANCE Δd BETWEEN TARGET OBJECT AND ROI (PLACE) — S202

EXCLUDE UNACQUIRED TARGET OBJECT IN ROI — S203

S204
IS TARGET OBJECT WHOSE DISTANCE Δd FROM ROI IS LESS THAN THRESHOLD Th2 AND WHICH IS UNACQUIRED PRESENT? — NO

YES

REMOVE SAME TARGET OBJECT — S205

S206
IS CLOSE OBJECT PRESENT? — NO

YES

S208
HOLD OBJECT ID AS NEW TARGET OBJECT

S207
HOLD OBJECT ID AS EXISTING TARGET OBJECT

S209
IS TARGET OBJECT PRESENT AROUND ROI FOR CERTAIN NUMBER OF FRAMES? — NO

YES

REGISTER OBJECT ID IN ACQUIRED OBJECT LIST AS TARGET OBJECT THAT HAS APPEARED FROM AROUND ROI — S210

DELETE OLDEST IMAGE FRAME — S211

END

# FIG.14

DIAGRAM ILLUSTRATING PROCESSING OF
CALCULATING DISTANCE BETWEEN TARGET OBJECT AND ROI

# FIG.15

DIAGRAM ILLUSTRATING PROCESSING OF
EXCLUDING UNACQUIRED TARGET OBJECT IN ROI

# FIG.16

DIAGRAM ILLUSTRATING PROCESSING OF REMOVING SAME TARGET OBJECT

25b

25a

# FIG.17

DIAGRAM (1) ILLUSTRATING PROCESSING RELATED TO HANDLING OF
INSTANTANEOUS ERRONEOUS DETECTION

f1

ROI

PLACE

26b        26a

f2

ROI

PLACE

26a

EP 4 651 078 A1

## FIG.18

DIAGRAM (2) ILLUSTRATING PROCESSING RELATED TO HANDLING OF INSTANTANEOUS ERRONEOUS DETECTION

EP 4 651 078 A1

# FIG.19

DIAGRAM (3) ILLUSTRATING PROCESSING RELATED TO HANDLING OF INSTANTANEOUS ERRONEOUS DETECTION

EP 4 651 078 A1

## FIG.20

FLOWCHART ILLUSTRATING PROCESSING PROCEDURE OF ACQUISITION DETECTION PROCESSING

# FIG.21

DIAGRAM (1) ILLUSTRATING EXAMPLE OF
ACQUISITION DETECTION PROCESSING AT TIME OF CONGESTION

# FIG.22

DIAGRAM (2) ILLUSTRATING EXAMPLE OF
ACQUISITION DETECTION PROCESSING AT TIME OF CONGESTION

OBJECT ID:
Ob2

OBJECT ID:
Ob3

OBJECT ID:
Ob4

FRAME NUMBER:
N+1

PERSON
ID: H2

PERSON
ID: H3

PERSON
ID: H5

OBJECT ID:
Ob3

OBJECT ID: Ob4

OBJECT ID: Ob1

145

OBJECT ID:
Ob3

OBJECT ID:
Ob4

PERSON
ID: H1

PERSON
ID: H2

PERSON
ID: H3

PERSON
ID: H5

CONFIRMED          ×          ○          ○

# FIG.23

FLOWCHART ILLUSTRATING PROCESSING PROCEDURE OF
INFORMATION PROCESSING DEVICE ACCORDING TO PRESENT EMBODIMENT

```
        ┌─────────────┐
        │    START    │
        └─────────────┘
               │
               ▼
┌──────────────────────────────────────┐
│         ACQUIRE VIDEO DATA AND        │
│   REGISTER VIDEO DATA IN VIDEO BUFFER │ ~S401
└──────────────────────────────────────┘
               │
               ▼
┌──────────────────────────────────────┐
│         DETECT REGION OF PERSON FROM  │
│      EACH IMAGE FRAME OF VIDEO DATA   │ ~S402
└──────────────────────────────────────┘
               │
               ▼
┌──────────────────────────────────────┐
│  ESTIMATE SKELETON INFORMATION ON     │
│     BASIS OF IMAGE OF REGION OF PERSON │ ~S403
└──────────────────────────────────────┘
               │
               ▼
┌──────────────────────────────────────┐
│         DETECT REGION OF OBJECT FROM  │
│      EACH IMAGE FRAME OF VIDEO DATA   │ ~S404
└──────────────────────────────────────┘
               │
               ▼
┌──────────────────────────────────────┐
│  OBJECT ACQUISITION DETECTION PROCESSING │ ~S405
└──────────────────────────────────────┘
               │
               ▼
        ┌─────────────┐
        │     END     │
        └─────────────┘
```

# FIG.24

DIAGRAM ILLUSTRATING TYPICAL PATTERN (1) OF ERRONEOUS DETECTION OCCURRING
AT TIME OF CONGESTION ACCORDING TO CONVENTIONAL TECHNOLOGY

EP 4 651 078 A1

# FIG.25

DIAGRAM (1) ILLUSTRATING EFFECT OF INFORMATION PROCESSING DEVICE ACCORDING TO PRESENT EMBODIMENT

EP 4 651 078 A1

# FIG.26

DIAGRAM ILLUSTRATING TYPICAL PATTERN (2) OF ERRONEOUS DETECTION OCCURRING
AT TIME OF CONGESTION ACCORDING TO CONVENTIONAL TECHNOLOGY

EP 4 651 078 A1

# FIG.27

DIAGRAM (2) ILLUSTRATING EFFECT OF INFORMATION PROCESSING DEVICE ACCORDING TO PRESENT EMBODIMENT

# FIG.28

DIAGRAM ILLUSTRATING EXAMPLE OF HARDWARE CONFIGURATION OF
COMPUTER THAT IMPLEMENTS FUNCTIONS SIMILAR TO THOSE OF
INFORMATION PROCESSING DEVICE ACCORDING TO EMBODIMENT

┌──────────────────────────────────────────────────────────── 300
│ COMPUTER
│
│  ┌─301    ┌─302      ┌─303     ┌─304        ┌─305
│  ┌─────┐  ┌───────┐  ┌───────┐ ┌────────┐  ┌──────────┐
│  │ CPU │  │ INPUT │  │DISPLAY│ │COMMUNI-│  │INTERFACE │
│  │     │  │DEVICE │  │       │ │ CATION │  │ DEVICE   │
│  └─────┘  └───────┘  └───────┘ │ DEVICE │  └──────────┘
│                                └────────┘
│                                              BUS
│                                              ┌─308

┌─306                              ┌─307
RAM                               HARD DISK DEVICE

┌─306a                             ┌─307a
ACQUISITION PROCESS               ACQUISITION PROGRAM

┌─306b                             ┌─307b
PERSON DETECTION                  PERSON DETECTION
PROCESS                           PROGRAM

┌─306c                             ┌─307c
OBJECT DETECTION                  OBJECT DETECTION
PROCESS                           PROGRAM

┌─306d                             ┌─307d
OBJECT ACQUISITION                OBJECT ACQUISITION
DETECTION PROCESS                 DETECTION PROGRAM

# FIG.29

DIAGRAM ILLUSTRATING CONVENTIONAL TECHNOLOGY FOR
ANALYZING PURCHASING BEHAVIOR

# FIG.30

DIAGRAM ILLUSTRATING PROBLEM OF CONVENTIONAL TECHNOLOGY

## INTERNATIONAL SEARCH REPORT

International application No.

**PCT/JP2023/044158**

### A. CLASSIFICATION OF SUBJECT MATTER

***G06T 7/20***(2017.01)i
FI: G06T7/20 300Z

According to International Patent Classification (IPC) or to both national classification and IPC

### B. FIELDS SEARCHED

Minimum documentation searched (classification system followed by classification symbols)

G06T7/20; H04N7/18; G06Q30/00; G08B13/196; G08B25/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-125026 A (TOSHIBA TEC KABUSHIKI KAISHA) 30 August 2021 (2021-08-30) abstract, fig. 1-3 | 1-15 |
| A | JP 2021-93649 A (CANON MARKETING JAPAN INC.) 17 June 2021 (2021-06-17) abstract, fig. 1-8 | 1-15 |
| A | JP 2021-39789 A (NEC CORPORATION) 11 March 2021 (2021-03-11) abstract | 1-15 |
| A | JP 2010-88072 A (MITSUBISHI DENKI INFORMATION TECHNOLOGY CORP.) 15 April 2010 (2010-04-15) abstract, fig. 1,5-7 | 1-15 |

☐ Further documents are listed in the continuation of Box C.    ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2024** | **23 January 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

47

## INTERNATIONAL SEARCH REPORT
### Information on patent family members

| International application No. |
|---|
| **PCT/JP2023/044158** |

| Patent document cited in search report | | | Publication date (day/month/year) | Patent family member(s) | | | Publication date (day/month/year) |
|---|---|---|---|---|---|---|---|
| JP | 2021-125026 | A | 30 August 2021 | US 2021/0248666 A1 abstract, fig. 1-3 US 2023/0169575 A1 abstract, fig. 1-3 EP 3862955 A1 abstract, fig. 1-3 CN 113221610 A abstract, fig. 1-3 | | | |
| JP | 2021-93649 | A | 17 June 2021 | (Family: none) | | | |
| JP | 2021-39789 | A | 11 March 2021 | WO 2019/038968 A1 abstract US 2020/0364752 A1 abstract | | | |
| JP | 2010-88072 | A | 15 April 2010 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022036983 A
- JP 2020173815 A

- JP 2016201105 A